# EUROPEAN PATENT APPLICATION

(11) **EP 4 776 741 A1**
(43) Date of publication of application: **15.07.2026**
(21) Application number: 24870728.3
(22) Date of filing: 24.09.2024
(51) Int. Cl.: H04W 76/00, H04W 4/00

(54) **COMMUNICATION METHOD AND APPARATUS**

(30) Priority: 27.09.2023 CN 202311276864
(71) Applicant: HUAWEI TECHNOLOGIES CO., LTD., Shenzhen 518129 (CN)
(72) Inventor: LI, Jiaojiao, Shenzhen, Guangdong 518129 (CN); LI, Yanbing, Shenzhen, Guangdong 518129 (CN); XU, Ling, Shenzhen, Guangdong 518129 (CN); QIANG, Li, Shenzhen, Guangdong 518129 (CN)
(74) Representative: Maiwald GmbH
(86) International application number: PCT/CN2024/120859
(87) International publication number: WO 2025/067184

(57) **Abstract**

A communication method and an apparatus are provided, to provide a solution for determining whether a terminal device is able to identify a PDU set for a specific service. A terminal device determines first indication information, where the first indication information indicates that the terminal device is able to identify a PDU set, and the first indication information is associated with one or more of the following: a first DRB, a first PDCP entity, a first QoS flow, and a first PDU session; and the terminal device sends the first indication information. A solution in which the terminal device determines, for a granularity of an XR service, whether a PDU set can be identified is provided, so that the terminal device can accurately determine, for a current XR service, whether a PDU set can be identified.

## Description

### CROSS-REFERENCE TO RELATED APPLICATIONS

This application claims priority to Chinese Patent Application No. 202311276864.1, filed with the China National Intellectual Property Administration on September 27, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and an apparatus.

### BACKGROUND

Service data generated at an application layer (application level) of a terminal device may be exchanged with an application server through a device like a base station or a core network. A data packet generated at the application layer of the terminal device may be carried by using a protocol data unit (protocol data unit, PDU) set (set). One PDU set includes one or more PDUs, and each PDU set carries a payload of one unit of information (unit of information) generated at the application layer of the terminal device, for example, one frame (frame) or one video slice (video slice).

In a process of interaction between the terminal device and the base station, the terminal device needs to identify the PDU set for some functions. For example, if the terminal device needs to discard one or more PDU sets, the terminal device needs to first have a capability of identifying the PDU set. However, the terminal device may have different capabilities for different services. Only after the base station determines whether the terminal device has a capability of identifying a PDU set for a specific service, the base station can provide a corresponding configuration related to the service for the terminal device. However, currently, there is no solution for determining whether the terminal device is able to identify the PDU set for the specific service.

### SUMMARY

This application provides a communication method and an apparatus, to provide a solution for determining whether a terminal device is able to identify a PDU set for a specific service.

According to a first aspect, an embodiment of this application provides a communication method. The method may be performed by a terminal device or a module (for example, a chip) used in the terminal device. For example, the terminal device performs the method. The method includes: The terminal device determines first indication information, where the first indication information indicates that the terminal device is able to identify a PDU set, and the first indication information is associated with one or more of the following: a first DRB, a first PDCP entity, a first QoS flow, and a first PDU session; and the terminal device sends the first indication information.

According to the foregoing method, the terminal device may determine the first indication information associated with at least one of the first DRB, the first PDCP entity, the first QoS flow, and the first PDU session, to determine a PDU set identification capability of the terminal device for the first DRB, the first PDCP entity, the first QoS flow, and the first PDU session. Therefore, a network device may determine the PDU set identification capability of the terminal device for the first DRB, the first PDCP entity, the first QoS flow, and the first PDU session, and provide appropriate configuration information for the terminal device. This embodiment of this application provides a solution in which the terminal device determines, for a service granularity, whether the PDU set can be identified, so that the terminal device can accurately determine, for a current service, whether the PDU set can be identified.

In a possible design, the first DRB is a DRB corresponding to an XR service of the terminal device, the first PDCP entity is a PDCP entity corresponding to the XR service of the terminal device, the first QoS flow is a QoS flow corresponding to the XR service of the terminal device, and the first PDU session is a PDU session corresponding to the XR service of the terminal device.

According to the foregoing method, the first indication information determined by the terminal device is related to the XR service, and the terminal device may accurately determine whether a PDU set can be identified for a current XR service.

In a possible design, the first indication information is determined by the terminal device based on application information of the XR service and/or capability information of the terminal device, and the capability information indicates a capability that is of the terminal device and that is related to the PDU set identification.

According to the foregoing method, the terminal device may determine, based on the application information of the current XR service and the capability information that is related to the PDU set and that is supported by the terminal device, whether the PDU set can be identified for the XR service, to generate the first indication information based on a determining result.

In a possible design, the capability information includes at least one of the following: the terminal device supports a capability of identifying the PDU set according to a first protocol, where the first protocol includes at least one of RTP, HTTP, UDP, and IP; and the terminal device supports a capability of identifying the PDU set based on traffic detection.

According to the foregoing method, the terminal device may have a plurality of different capabilities related to the PDU set identification, so that the PDU set can be more flexibly identified.

In a possible design, the terminal device receives second indication information, where the second indication information indicates the application information of the XR service.

According to the foregoing method, the terminal device may obtain the application information of the XR service by using the second indication information, to determine, based on information about the XR service, whether the PDU set can be identified for the XR service.

In a possible design, the first indication information is carried in at least one of the following messages:
a UE assistance information message, a radio resource control RRC reconfiguration complete message, an RRC connection establishment complete message, and an RRC connection resume complete message.

According to the foregoing method, the terminal device may include the first indication information in a message of at least one of a plurality of different message types, to improve diversity of manners of sending the first indication information.

In a possible design, the first indication information is carried in a NAS message.

In a possible design, that the terminal device is able to identify the PDU set, as indicated by the first indication information includes at least one of the following:
the terminal device is able to identify a PDU included in the PDU set, the terminal device is able to identify PSI of the PDU set, and the terminal device is able to support PDU set-based processing.

According to the foregoing method, the terminal device may identify the PDU set from a plurality of different aspects.

In a possible design, that the terminal device is able to support the PDU set-based processing includes that the terminal device supports PDU set-based discarding.

According to the foregoing method, the terminal device may determine whether the PDU set-based discarding is supported for a specific XR service, so that the network device appropriately configures the terminal. For example, when the terminal device supports the PDU set-based discarding, the configuration information sent by the network device to the terminal device may indicate the PDU set-based discarding

According to a second aspect, an embodiment of this application provides a communication method. The method may be performed by a network device or a module (for example, a chip) used in the network device. For example, the network device performs the method. The network device may include a first network device and/or a second network device. For example, the first network device may be a core network device, and the second network device may be an access network device. The method includes: receiving first indication information, where the first indication information indicates that a terminal device is able to identify a protocol data unit PDU set, and the first indication information is associated with one or more of the following: a first DRB, a first PDCP entity, a first QoS flow, and a first PDU session.

According to the foregoing method, the network device may receive the first indication information sent by the terminal device. Because the first indication information is the first indication information that is determined by the terminal device and that is associated with at least one of the first DRB, the first PDCP entity, the first QoS flow, and the first PDU session, so that a capability of identifying the PDU set for the first DRB, the first PDCP entity, the first QoS flow, and the first PDU session of the terminal device is determined. The network device may determine appropriate configuration information or requirement information based on the capability of the terminal device.

In a possible design, the first DRB is a DRB corresponding to an XR service of the terminal device, the first PDCP entity is a PDCP entity corresponding to the XR service of the terminal device, the first QoS flow is a QoS flow corresponding to the XR service of the terminal device, and the first PDU session is a PDU session corresponding to the XR service of the terminal device.

According to the foregoing method, the first indication information received by the network device is related to the XR service, and the network device may accurately determine whether the terminal device is able to identify the PDU set for the current XR service.

In a possible design, the network device sends configuration information to the terminal device, where the configuration information indicates processing performed by the terminal device on the PDU set.

According to the foregoing method, the network device may appropriately configure the processing on the PDU set for the terminal device based on the first indication information. For example, when the terminal device is able to identify the PDU set for the XR service, the configuration information that may be sent by the network device to the terminal device may indicate the processing performed by the terminal device on the PDU set.

In a possible design, the processing that is on the PDU set and that is indicated by the configuration information includes processing on a PDU set corresponding to at least one of the first DRB, the first PDCP entity, the first QoS flow, and the first PDU session.

According to the foregoing method, because the first indication information is associated with the at least one of the first DRB, the first PDCP entity, the first QoS flow, and the first PDU session, the configuration information sent by the network device to the terminal device indicates the processing on the PDU set corresponding to the at least one of the first DRB, the first PDCP entity, the first QoS flow, and the first PDU session. Therefore, the configuration information sent by the network device to the terminal device is more appropriate.

In a possible design, the first indication information is carried in at least one of the following messages: a UE assistance information message, an RRC reconfiguration complete message, an RRC connection establishment complete message, and an RRC connection resume complete message.

According to the foregoing method, the first indication information may be carried in at least one of a plurality of different message types, to improve diversity of manners of sending the first indication information.

In a possible design, the network device sends third indication information, where the third indication information indicates indication information related to the PDU set.

In a possible design, the third indication information includes the first indication information.

In the foregoing method, after receiving the first indication information, the network device may indicate information related to the PDU set to another network device, so that the another network device determines whether the terminal device is able to identify the PDU set for the XR service. For example, after receiving the first indication, the core network device may send the third indication information to the access network device, to indicate, by using the third indication information, content related to the PDU set. For example, the third indication information includes the first indication information, and the core network device indicates, to the access network device, whether the terminal device is able to identify the PDU set for the XR service.

In a possible design, the network device sends second indication information to the terminal device, where the second indication information indicates application information of the XR service.

According to the foregoing method, the terminal device may obtain the application information of the XR service by using the second indication information, to more accurately determine, based on information about the XR service, whether the PDU set can be identified for the XR service.

In a possible design, the first indication information is carried in a NAS message.

In a possible design, that the terminal device is able to identify the PDU set, as indicated by the first indication information includes at least one of the following:
the terminal device is able to identify a PDU included in the PDU set, the terminal device is able to identify PSI of the PDU set, and the terminal device is able to support PDU set-based processing.

According to the foregoing method, the terminal device may identify the PDU set from a plurality of different aspects.

In a possible design, that the terminal device is able to support the PDU set-based processing includes that the terminal device supports PDU set-based discarding.

According to the foregoing method, the terminal device may determine whether PDU set-based discarding is supported for the XR service, so that the network device appropriately configures the terminal. For example, when the terminal device supports the PDU set-based discarding, the configuration information sent by the network device to the terminal device may indicate the PDU set-based discarding

According to a third aspect, an embodiment of this application provides a communication method. The method may be performed by a terminal device or a module (for example, a chip) used in the terminal device. For example, the terminal device performs the method. The method includes: The terminal device determines capability information, where the capability information indicates a capability of the terminal device related to PDU set identification; and the terminal device sends the capability information to a first network device.

According to the foregoing method, the terminal device sends the capability information to the first network device. Because the capability information indicates the capability of the terminal device related to the PDU set identification, to provide a basis for the first network device to determine whether the terminal device is able to identify a PDU set, so that the first network device can accurately determine, based on the capability information sent by the terminal device, whether the terminal device is able to identify the PDU set. For example, the first network device may determine, based on the capability information of the terminal device, whether the terminal device is able to identify the PDU set for the XR service.

In a possible design, the terminal device receives fourth indication information sent by the first network device, where the fourth indication information indicates application information of the XR service.

According to the foregoing method, the terminal device may obtain the application information of the XR service by using the fourth indication information, to more accurately determine, based on information about the XR service, whether the PDU set can be identified for the XR service.

In a possible design, the network device determines, based on the application information of the XR service and/or the capability information, that the terminal device is able to identify the PDU set for the XR service.

According to the foregoing method, the network device may accurately determine, based on the application information of the XR service and the capability information that is related to the PDU set and that is supported by the terminal device, whether the PDU set can be identified for the XR service.

In a possible design, the capability information includes at least one of the following:
the terminal device supports a capability of identifying the PDU set according to a first protocol, where the first protocol includes at least one of RTP, HTTP, UDP, and IP; and the terminal device supports a capability of identifying the PDU set based on traffic detection.

According to the foregoing method, the terminal device may have a plurality of different capabilities related to the PDU set identification, so that the PDU set can be more accurately identified.

In a possible design, that the terminal device is able to identify the PDU set for the XR service includes at least one of the following:
the terminal device is able to identify a 1^{st} PDU or a last PDU of the PDU set, the terminal device is able to identify PSI of the PDU set, and the terminal device is able to support PDU set-based processing.

According to the foregoing method, the terminal device may identify the PDU set from a plurality of different aspects.

In a possible design, that the terminal device is able to support the PDU set-based processing includes that the terminal device supports PDU set-based discarding.

According to the foregoing method, the terminal device may determine whether PDU set-based discarding is supported for the XR service, so that the network device appropriately configures the terminal. For example, when the terminal device supports the PDU set-based discarding, the configuration information sent by the network device to the terminal device may indicate the PDU set-based discarding

According to a fourth aspect, an embodiment of this application provides a communication method. The method may be performed by a first network device or a module (for example, a chip) used in the first network device. For example, the first network device performs the method. The method includes: The first network device receives capability information sent by a terminal device, where the capability information indicates a capability of the terminal device related to PDU set identification; and the first network device determines, based on the capability information, that the terminal device is able to identify a PDU set for an XR service.

According to the foregoing method, the first network device receives the capability information from the terminal device. Because the capability information indicates the capability of the terminal device related to the PDU set identification, the first network device may accurately determine, based on the capability information sent by the terminal device, whether the terminal device is able to identify the PDU set for the XR service. This embodiment of this application provides a solution in which the first network device determines, for a granularity of the XR service, whether the terminal device is able to identify the PDU set. The first network device may accurately determine, for a current XR service, whether the terminal device is able to identify the PDU set.

In a possible design, the first network device sends fifth indication information to a second network device, where the fifth indication information indicates that the terminal device is able to identify the PDU set for the XR service.

According to the foregoing method, the first network device may notify, by using the fifth indication information, the second network device that the terminal device is able to identify the PDU set for the XR service, so that the second network device appropriately configures the terminal device.

In a possible design, the first network device determines, based on the capability information and/or application information of the XR service, that the terminal device is able to identify the PDU set for the XR service.

According to the foregoing method, the first network device may accurately determine, based on the application information of the XR service and the capability information that is related to the PDU set and that is supported by the terminal device, whether the PDU set can be identified for the XR service.

In a possible design, the first network device sends fourth indication information to the terminal device, where the fourth indication information indicates the application information of the XR service.

According to the foregoing method, the terminal device may obtain the application information of the XR service by using the fourth indication information, so that the terminal device can more accurately determine, based on information about the XR service, whether the PDU set can be identified for the XR service.

In a possible design, the capability information includes at least one of the following:
the terminal device supports a capability of identifying the PDU set according to a first protocol, where the first protocol includes at least one of a real-time transport protocol RTP, a hypertext transfer protocol HTTP, a user datagram protocol UDP, and an internet protocol IP; and
the terminal device supports a capability of identifying the PDU set based on traffic detection.

According to the foregoing method, the terminal device may have a plurality of different capabilities related to the PDU set identification, so that the PDU set can be more accurately identified.

In a possible design, that the terminal device is able to identify the PDU set for the XR service includes at least one of the following:
the terminal device is able to identify a 1^{st} PDU or a last PDU of the PDU set, the terminal device is able to identify PSI of the PDU set, and the terminal device is able to support PDU set-based processing.

According to the foregoing method, the terminal device may identify the PDU set from a plurality of different aspects.

In a possible design, that the terminal device is able to support the PDU set-based processing includes that the terminal device supports PDU set-based discarding.

According to the foregoing method, the terminal device may determine whether PDU set-based discarding is supported for the XR service, so that the network device appropriately configures the terminal. For example, when the terminal device supports the PDU set-based discarding, the configuration information sent by the network device to the terminal device may indicate the PDU set-based discarding

According to a fifth aspect, an embodiment of this application provides a communication method. The method may be performed by a second network device or a module (for example, a chip) used in the second network device. For example, the second network device performs the method. The method includes: The second network device receives fifth indication information, where the fifth indication information indicates that a terminal device is able to identify a PDU set for an XR service; and the second network device sends configuration information to the terminal device, where the configuration information indicates processing performed by the terminal device on the PDU set.

According to the foregoing method, the second network device may determine, based on the fifth indication information, whether the terminal device is able to identify the PDU set for the XR service, to appropriately configure the terminal device depending on whether the terminal device is able to identify the PDU set for the XR service.

In a possible design, a capability of the processing that is on the PDU set and that is indicated by the configuration information includes a capability of processing on the PDU set corresponding to the XR service.

According to the foregoing method, because the fifth indication information indicates whether the terminal device is able to identify the PDU set for the XR service, correspondingly, the second network device indicates, based on the fifth indication information, the processing capability of the terminal device for the PDU set corresponding to the XR service, so that the configuration information sent by the second network device to the terminal device is more appropriate.

According to a sixth aspect, this application further provides a communication apparatus. The communication apparatus has a function of implementing the method according to any one of the first aspect or the possible designs of the first aspect, or the communication apparatus has a function of implementing the method according to any one of the third aspect or the possible designs of the third aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the terminal in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a network device. The interface circuit may alternatively be a transceiver. The transceiver may include a transmitter and a receiver. The transmitter and the receiver may be different components, or may be a same component but can implement different functions.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the first aspect or the third aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a terminal, or a chip or a chip system in the terminal. If the communication apparatus is a terminal, the transceiver may be a radio frequency transceiver component in the terminal. If the communication apparatus is a chip or a chip system disposed in the terminal, the transceiver may be a communication interface in the chip or the chip system. The communication interface is connected to a radio frequency transceiver component in the terminal, to implement information sending and receiving through the radio frequency transceiver component.

According to a seventh aspect, this application further provides a communication apparatus. The communication apparatus has a function of implementing the method according to any one of the second aspect or the possible designs of the second aspect, the communication apparatus has a function of implementing the method according to any one of the fourth aspect or the possible designs of the fourth aspect, or the communication apparatus has a function of implementing the method according to any one of the fifth aspect or the possible designs of the fifth aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal. The interface circuit may alternatively be a transceiver. The transceiver may include a transmitter and a receiver. The transmitter and the receiver may be different components, or may be a same component but can implement different functions.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method according to the second aspect, the fourth aspect, or the fifth aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a network device, or a chip or a chip system in the network device. If the communication apparatus is a network device, the transceiver may be a radio frequency transceiver component in the network device. If the communication apparatus is a chip or a chip system disposed in the network device, the transceiver may be a communication interface in the chip or the chip system. The communication interface is connected to a radio frequency transceiver component in the network device, to implement information sending and receiving through the radio frequency transceiver component.

According to an eighth aspect, a computer-readable storage medium is provided. The computer-readable storage medium stores a computer program or instructions. When the computer program or the instructions are executed by a processor, the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, or the method according to any one of the fifth aspect or the possible designs of the fifth aspect is implemented.

According to a ninth aspect, a computer program product storing instructions is provided. When the instructions are run by a processor, the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, or the method according to any one of the fifth aspect or the possible designs of the fifth aspect is implemented.

According to a tenth aspect, a communication apparatus is provided. The communication apparatus includes a processor. The processor is configured to implement the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, or the method according to any one of the fifth aspect or the possible designs of the fifth aspect. In addition, the communication apparatus may further include a storage medium. The storage medium stores instructions. When the instructions are executed by the processor, the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, or the method according to any one of the fifth aspect or the possible designs of the fifth aspect is implemented. The communication apparatus may be a chip or a chip system. The chip system may include a chip, or may include a chip and another discrete component.

According to an eleventh aspect, a communication system is provided. The communication system includes the first terminal device according to the first aspect and the network device according to the second aspect.

According to a twelfth aspect, a communication system is provided. The communication system includes the first terminal device according to the third aspect, the first network device according to the fourth aspect, and the second network device according to the fifth aspect.

For each aspect of the sixth aspect to the twelfth aspect and technical effects that may be achieved in each aspect, refer to the technical effects that can be achieved in the first aspect or the possible solutions of the first aspect, the technical effects that can be achieved in the possible solutions of the second aspect or the possible solutions of the second aspect, the technical effects that can be achieved in the third aspect or the possible solutions of the third aspect, the technical effects that can be achieved in the fourth aspect or the possible solutions of the fourth aspect, or the technical effects that can be achieved in the fifth aspect or the possible solutions in the fifth aspect. Details are not described herein again.

### BRIEF DESCRIPTION OF DRAWINGS

FIG. 1 is a diagram of a communication system according to an embodiment of this application;
FIG. 2 is a diagram of data transmission according to an embodiment of this application;
FIG. 3 is a flowchart of a communication method according to an embodiment of this application;
FIG. 4 is an overall flowchart of a communication method according to an embodiment of this application;
FIG. 5 is a flowchart of a communication method according to an embodiment of this application;
FIG. 6 is an overall flowchart of a communication method according to an embodiment of this application;
FIG. 7 is a flowchart of a communication method according to an embodiment of this application;
FIG. 8 is an overall flowchart of a communication method according to an embodiment of this application;
FIG. 9 is a flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application;
FIG. 12 is a diagram of a structure of a communication apparatus according to an embodiment of this application;
FIG. 13 is a diagram of a structure of a communication apparatus according to an embodiment of this application;
FIG. 14 is a diagram of a structure of a communication apparatus according to an embodiment of this application;
FIG. 15 is a diagram of a structure of a communication apparatus according to an embodiment of this application; and
FIG. 16 is a diagram of a structure of a communication apparatus according to an embodiment of this application.

### DESCRIPTION OF EMBODIMENTS

The technical solutions provided in embodiments of this application may be applied to a 5th generation (fifth generation, 5G) mobile communication system (for example, a 5G new radio (new radio, NR) system), or applied to a long term evolution (long term evolution, LTE) system; or may be applied to a next generation mobile communication system, for example, a 6G mobile communication system or other similar communication systems. The other similar communication systems include, for example, vehicle to everything (vehicle to everything, V2X), an internet of things (internet of things, IoT) system, and a narrowband internet of things (narrowband internet of things, NB-IoT) system. IoT may be understood as IoT or a wearable Wi-Fi network based on wireless fidelity (wireless fidelity, Wi-Fi). The wearable Wi-Fi network is a Wi-Fi network including a terminal device (for example, a mobile phone), which is used as a virtual access point, and an associated wearable device. In embodiments of this application, a 5G mobile communication system is used as an example for description. When the technical solutions in embodiments of this application are applied to another communication system, devices, components, modules, and the like in embodiments may be replaced with corresponding devices, components, and modules in the another communication system. This is not limited.

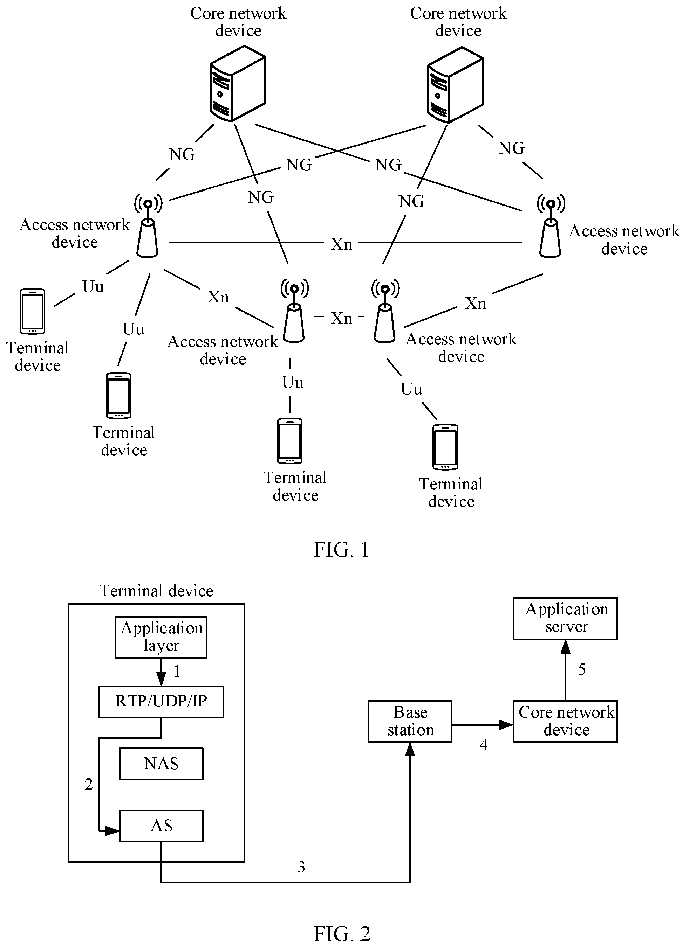

FIG. 1 shows a communication system applicable to an embodiment of this application. A 5G mobile communication system is used as an example, and may include a network device and at least one terminal device. For example, the network device may include a device (for example, a core network device) in a 5G core network (for example, a 5GC) and a device (for example, an access network device) in a 5G access network (for example, an NG-RAN) shown in FIG. 1. An access and mobility management function (access and mobility management function, AMF), a user plane function (user plane function, UPF), and a session management function (session management function, SMF) are three network elements in the 5GC. A gNB (namely, a 5G base station) and an ng-eNB (namely, a 4G base station connected to the 5GC) are two network elements in the NG-RAN. The serving base station gNB of the terminal device is responsible for providing a user plane protocol function and a control plane protocol function in 5G NR for the terminal device. The serving base station ng-eNB of the terminal device is responsible for providing a user plane protocol function and a control plane protocol function in LTE for the terminal.

The terminal device in embodiments of this application may be a wireless terminal device that can receive scheduling and indication information from the network device. The terminal device may be a device that provides voice and/or data connectivity for users, a handheld device with a wireless connection function, or another processing device connected to a wireless modem. In embodiments of this application, an apparatus configured to implement a function of the terminal device may be a terminal device, may be a module or a unit that can be used in the terminal device, or may be an apparatus, for example, a chip system, that is able to support the terminal device in implementing the function. The apparatus may be installed in the terminal device or used in collaboration with the terminal device.

The terminal device is also referred to as a terminal, user equipment (user equipment, UE), a mobile station (mobile station, MS), a mobile terminal (mobile terminal, MT), or the like. The terminal device is a device that includes a wireless communication function (providing voice/data connectivity to users), for example, a handheld device or a vehicle-mounted device that has a wireless connection function. Currently, some examples of the terminal device are: a mobile phone (mobile phone), a tablet computer, a notebook computer, a palmtop computer, a mobile internet device (mobile Internet device, MID), a wearable device, a virtual reality (virtual reality, VR) device, an augmented reality (augmented reality, AR) device, a wireless terminal in industrial control, a wireless terminal in vehicle to everything, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). For example, the wireless terminal in the vehicle to everything may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a vacuum cleaner, a speaker, a set-top box, or the like.

The access network device in embodiments of this application may be a device in a wireless network. For example, the access network device may be a device that is deployed in a radio access network and that provides a wireless communication function for the terminal. For example, the access network device may be a radio access network (radio access network, RAN) node that connects the terminal to the wireless network. In embodiments of this application, an apparatus configured to implement a function of the access network device may be an access network device, may be a module or a unit that can be used in the access network device, or may be an apparatus, for example, a chip system, that is able to support the access network device in implementing the function. The apparatus may be installed in the access network device or used in collaboration with the access network device.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a network device in a 5G mobile communication system, for example, a next generation NodeB (next generation NodeB, gNB), a transmission reception point (transmission reception point, TRP) or a TP in an NR system; or one antenna panel or one group of antenna panels (including a plurality of antenna panels) of a base station in a 5G mobile communication system. Alternatively, the network device may be a network node that forms a gNB or a transmission point, for example, a BBU or a distributed unit (distributed unit, DU).

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, to implement functions of a radio resource control RRC layer and a packet data convergence protocol (packet data convergence protocol, PDCP) layer. The DU is responsible for processing a physical layer protocol and a real-time service, to implement functions of a radio link control (radio link control, RLC) layer, a MAC layer, and a physical (physical, PHY) layer. The AAU implements some processing functions of the physical layer, radio frequency processing, and a function related to an active antenna. Information at the RRC layer is finally changed to information at the PHY layer, or is changed from information at the PHY layer. Therefore, in this architecture, higher-layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited in this application.

In a possible scenario, a plurality of RAN devices (or referred to as RAN nodes) cooperatively assist a terminal in implementing wireless access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open-radio access network (open-radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the core network (core network, CN) device serves as an interface provided by a bearer network to a data network (data network, DN), and provides a communication connection, authentication, management, and policy control for the terminal device, bears a data service, and the like. The core network device may include the following network elements: an SMF network element, an AMF network element, a unified data management (unified data management, UDM) function network element, an authentication server function (authentication server function, AUSF) network element, a policy control function (policy control function, PCF) network element, a user plane function (user plane function, UPF) network element, a network slice selection function (network slice selection function, NSSF) network element, a network exposure function (network exposure function, NEF) network element, a network repository function (network repository function, NRF) network element, an application function (application function, AF) network element, and the like. It should be noted that the core network may include one or more CN devices. The CN device may be a network element configured to perform the foregoing single network function, or may be a network element configured to perform the foregoing plurality of network functions. When one CN device is configured to perform the plurality of network functions, the CN device may include one or more functional modules configured to perform the plurality of network functions. The functional module may be a software module, or may be a software/hardware module. This is not limited in embodiments of this application.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, and (or) c may represent a, b, c, a and b, a and c, b and c, or a, b and c, and each of a, b, c may be an element, or may be a set including one or more elements.

In this application, "for example", "in some embodiments", "in some other embodiments", and the like are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

"Of (of)", "corresponding (corresponding, relevant)", and "corresponding (corresponding)" in this application may be interchangeably used sometimes. It should be noted that meanings expressed by the terms are consistent when differences between the terms are not emphasized. In embodiments of this application, communication and transmission may be interchangeably used sometimes. It should be noted that meanings expressed by the terms are consistent when differences between the terms are not emphasized. For example, transmission may include sending and/or receiving, and may be a noun or a verb.

In this application, an "indication" may include a direct indication, an indirect indication, an explicit indication, and an implicit indication. When a piece of indication information is described as indicating A, it may be understood as that the indication information carries A, directly indicates A, or indirectly indicates A.

It should be noted that in embodiments of this application, words such as "first" and "second" are merely used for purpose of distinguishing descriptions, and cannot be understood as an indication or implication of relative importance or an indication or implication of a sequence.

For ease of understanding of embodiments of this application, several basic concepts in embodiments of this application are briefly described.

PDU set: One PDU set includes one or more PDUs, and each PDU set carries a payload of one unit of information (unit of information) generated at an application layer of a terminal device, for example, one frame (frame) or one video slice (video slice).

Data burst (Data burst): It is data generated at the application layer in short duration. One data burst may include a PDU of one or more PDU sets.

Extended reality (extended reality, XR): It is a virtual environment that is created by combining reality and virtuality and in which human-machine interaction can be performed. XR is a general term for different types of implementations, including but not limited to virtual reality (virtual reality, VR), augmented reality (augmented reality AR), and mixed reality (mixed reality, MR).

When the terminal device starts an XR service, the application layer of the terminal device may interact with an application server. For example, when an application layer of a terminal device generates uplink XR data, the terminal device may send the uplink XR data to a corresponding application server through a device like a base station or a core network. As shown in FIG. 2, a process from generation to sending of the uplink XR data to the application server is as follows: The application layer of the terminal device generates an XR data packet (namely, a PDU set), and transmits the XR data packet downward to an access stratum (access stratum, AS) through processing according to a real-time transport protocol (real-time transport protocol, RTP), a user datagram protocol (user datagram protocol, UDP), an internet protocol (internet protocol, IP), or the like. The AS sends the XR data packet (one or more PDUs) to the base station, and the base station receives the XR data packet. The base station delivers the XR data packet to the core network device. The core network device delivers the XR data packet to the application server.

In a process of interaction between the terminal device and a network device (the base station or the core network device), the network device may configure, for the terminal device, information related to processing on the PDU set. The terminal device needs to be able to identify the PDU set for some configurations of the network device. For example, the base station may configure PDU set-based discarding for the terminal device, namely, discarding at a granularity of the PDU set. For example, when network congestion occurs, the terminal device may be indicated to discard an unimportant PDU set. If the terminal device discards the unimportant PDU set, the terminal device needs to be able to identify the PDU set. Therefore, the network device needs to perform a corresponding configuration depending on whether the terminal device is able to identify the PDU set.

Currently, the terminal device may report, to the network device, whether the terminal device supports PDU set identification. For example, the terminal device may indicate, in a UE capability information message, whether the terminal device supports the PDU set identification. This reporting manner is at a granularity of the terminal device, and represents whether the terminal device has a capability of identifying a PDU set. However, the terminal device identifies that the PDU set is related to a service. The XR service is as an example. Different XR services may use different higher-layer protocols and/or different higher-layer protocol formats. For example, an XR service 1 uses an RTP protocol, an XR service 2 uses an encrypted RTP protocol (namely, an SRTP protocol), an XR service 3 uses an RTP extension header, and an XR service 4 uses an internet protocol security (IPsec). The terminal device also has different PDU set identification capabilities for XR services using different higher-layer protocols and/or different higher-layer protocol formats. In other words, the terminal device may have different PDU set identification capabilities for different XR services. Therefore, if the terminal device only indicates, to the network device, that the terminal device supports or does not support the PDU set identification, the network device cannot configure PDU set-based processing for the terminal device for different XR services. For example, the terminal device reports that the terminal device supports the PDU set identification, and the network device configures processing of a PDU set related to the XR service 4 for the terminal device. However, the terminal device cannot support identification of the PDU set of the XR service 4, and the terminal device cannot perform the configuration of the network device. For another example, because the terminal device cannot support identification of a PDU set of the XR service 4, the terminal device reports to the network device that the PDU set identification cannot be supported, and the network device cannot configure the PDU set identification for the terminal device. Although the terminal device is able to support identification of a PDU set of the XR service 3, the configuration of the network device cannot fully play a function of the configuration.

An embodiment of this application provides a communication method, which may be used to determine whether a terminal device is able to identify a PDU set. An example in which a terminal device and a network device are execution bodies is used below for description. However, the execution bodies may alternatively be a module (for example, a chip) used in the terminal device and a module (for example, a chip) used in the network device. Processing performed by a single execution entity shown in this embodiment of this application may alternatively be performed by a plurality of execution entities. These execution entities may be logically and/or physically separated. For example, processing performed by the network device may be performed by at least one of a CU, a DU, and an RU.

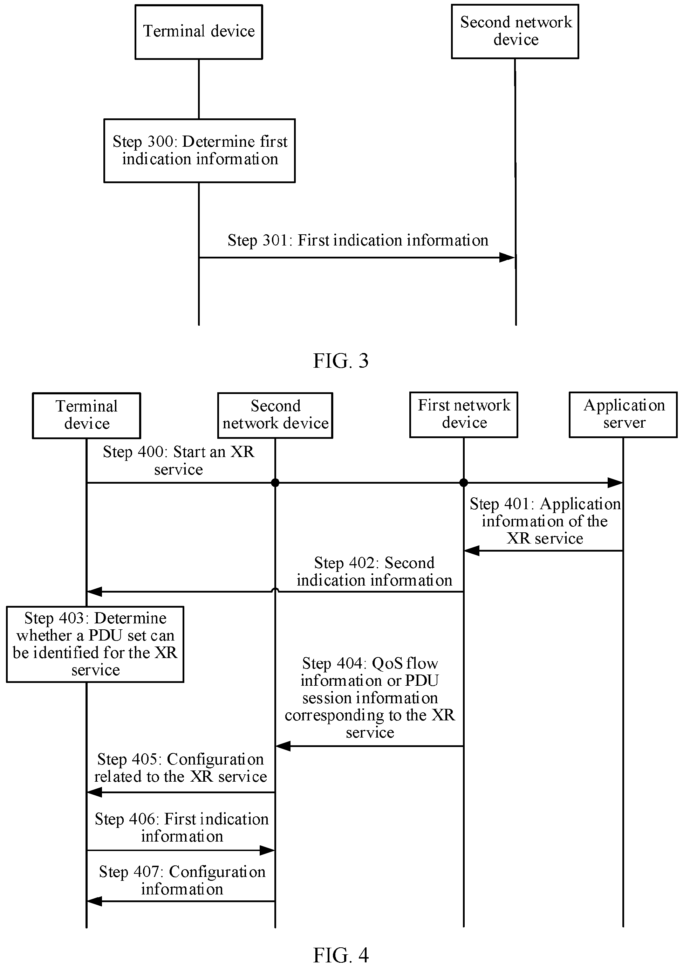

As shown in FIG. 3, the method may include the following steps.

Step 300: A terminal device determines first indication information.

Step 301: The terminal device sends the first indication information to a second network device.

Correspondingly, the second network device receives the first indication information.

The second network device may be an access network device. For example, the second network device may be a base station.

Optionally, the first indication information may indicate that the terminal device is able to identify a PDU set, the first indication information may indicate that the terminal device is not able to identify a PDU set, or the first indication information may indicate a capability of the terminal device to identify a PDU set.

For example, if the terminal device is able to identify the PDU set, the terminal device sends the first indication information to the second network device. Correspondingly, after receiving the first indication information, the second network device determines that the terminal is able to identify the PDU set.

Alternatively, if the terminal device is not able to identify the PDU set, the terminal device sends the first indication information to the second network device. Correspondingly, after receiving the first indication information, the second network device determines that the terminal is not able to identify the PDU set.

Alternatively, the terminal device may indicate, by using an information bit in the first indication information, whether the terminal device is able to identify the PDU set. For example, when a value of the information bit of the first indication information is a first value (for example, 1), it indicates that the terminal device is able to identify the PDU set; or when a value of the information bit of the first indication information is a second value (for example, 0), it indicates that the terminal device is not able to identify the PDU set.

Optionally, the first indication information indicates that the terminal device is able to identify a PDU set in a first range, the first indication information indicates that the terminal device is not able to identify a PDU set in a first range, or the first indication information indicates a capability of the terminal device to identify a PDU set in a first range. The first range may be determined based on a division granularity of the PDU set. Optionally, the first range is obtained through division based on different services (for example, XR services), or services (for example, XR services) associated with the PDU set in the first range are the same.

Optionally, the first indication information is associated with one or more of the following:
a first data radio bearer (data radio bearer, DRB);
a first packet data convergence protocol (packet data convergence protocol, PDCP) entity;
a first quality of service (quality of service, QoS) flow; and
a first PDU session.

The first indication information is associated with at least one of the first DRB, the first PDCP entity, the first QoS flow, and the first PDU session. It may be understood that a granularity of the first indication information may be the first DRB, the first PDCP entity, the first QoS flow, or the first PDU session.

That the first indication information is associated with the first DRB may also be understood as that the first indication information indicates a capability of the terminal device to identify a PDU set for the first DRB. An indication manner of the first indication information may include but is not limited to the following:

Indication manner 1a: The first indication information may include an identifier of the first DRB and information indication content. For example, the information indication content may be "1", where "1" indicates that the terminal device is able to or is not able to identify the PDU set. Correspondingly, the first indication information may further include an identifier of a second DRB and information indication content, to indicate a capability of the terminal device to identify a PDU set for the second DRB.

Indication manner 1b: The first indication information may include an identifier corresponding to the first DRB. For example, when the first indication information includes the identifier corresponding to the first DRB, the first indication information may indicate that the terminal device is able to or is not able to identify the PDU set corresponding to the first DRB. Optionally, each DRB may have a corresponding identifier, and the identifier corresponding to the DRB is carried in the first indication information, to indicate a capability of the terminal device to identify a PDU set corresponding to the DRB.

That the first indication information is associated with the first PDCP entity may also be understood as that the first indication information indicates a capability of the terminal device to identify a PDU set for the first PDCP entity. An indication manner of the first indication information may include but is not limited to the following:

Indication manner 2a: The first indication information may include an identifier of the first PDCP entity and information indication content. For example, the information indication content may be "1", where "1" indicates that the terminal device is able to or is not able to identify the PDU set corresponding to the first PDCP entity. Correspondingly, the first indication information may further include an identifier of a second PDCP entity and information indication content, to indicate a capability of the terminal device to identify a PDU set for the second PDCP entity.

Indication manner 2b: The first indication information may include an identifier corresponding to the first PDCP entity. For example, when the first indication information includes the identifier corresponding to the first PDCP entity, the first indication information may indicate that the terminal device is able to or is not able to identify the PDU set corresponding to the first PDCP entity. Optionally, each PDCP entity may have a corresponding identifier, and the identifier corresponding to the PDCP entity is carried in the first indication information, to indicate a capability of the terminal device to identify a PDU set corresponding to the PDCP entity.

That the first indication information is associated with the first QoS flow may also be understood as that the first indication information indicates a capability of the terminal device to identify a PDU set for the first QoS flow. An indication manner of the first indication information may include but is not limited to the following:

Indication manner 3a: The first indication information may include an identifier of the first QoS flow and information indication content. For example, the information indication content may be "0", where "0" indicates that the terminal device is able to or is not able to identify the PDU set corresponding to the first QoS flow. Correspondingly, the first indication information may further include an identifier of a second QoS flow and information indication content, to indicate a capability of the terminal device to identify a PDU set for the second QoS flow.

Indication manner 3b: The first indication information may include an identifier corresponding to the first QoS flow. For example, when the first indication information includes the identifier corresponding to the first QoS flow, the first indication information may indicate that the terminal device is able to or is not able to identify the PDU set corresponding to the first QoS flow. Optionally, each QoS flow may have a corresponding identifier, and the identifier corresponding to the QoS flow is carried in the first indication information, to indicate a capability of the terminal device to identify a PDU set corresponding to the QoS flow.

That the first indication information is associated with the first PDU session may also be understood as that the first indication information indicates a capability of the terminal device to identify a PDU set for the first PDU session. An indication manner of the first indication information may include but is not limited to the following:

Indication manner 4a: The first indication information may include an identifier of the first PDU session and information indication content. For example, the information indication content may be "0", where "0" indicates that the terminal device is able to or is not able to identify the PDU set corresponding to the first PDU session. Correspondingly, the first indication information may further include an identifier of a second PDU session and information indication content, to indicate a capability of the terminal device to identify a PDU set for the second PDU session.

Indication manner 4b: The first indication information may include an identifier corresponding to the first PDU session. For example, when the first indication information includes the identifier corresponding to the first PDU session, the first indication information may indicate that the terminal device is able to or is not able to identify the PDU set corresponding to the first PDU session. Optionally, each PDU session may have a corresponding identifier, and the identifier corresponding to the PDU session is carried in the first indication information, to indicate a capability of the terminal device to identify a PDU set corresponding to the PDU session.

The capability of the terminal device to identify the PDU set includes: The terminal device is able to identify the PDU set, or the terminal device is not able to identify the PDU set.

Optionally, the first DRB may be a DRB corresponding to an XR service of the terminal device, the first PDCP entity may be a PDCP entity corresponding to the XR service of the terminal device, the first QoS flow may be a QoS flow corresponding to the XR service of the terminal device, and the first PDU session may be a PDU session corresponding to the XR service of the terminal device. Alternatively, the first DRB may be a DRB corresponding to an XR service, the first PDCP entity may be a PDCP entity corresponding to the XR service, the first QoS flow may be a QoS flow corresponding to the XR service, and the first PDU session may be a PDU session corresponding to the XR service.

Optionally, the first DRB, the first PDCP entity, the first QoS flow, and the first PDU session are a first DRB, a first PDCP entity, a first QoS flow, and a first PDU session of an uplink service.

Optionally, the XR service may be an XR service currently initiated by the terminal device. The first DRB may be a DRB configured for the XR service initiated by the terminal device, the first PDCP entity may be a PDCP entity configured for the XR service initiated by the terminal device, the first QoS flow may be a QoS flow configured for the XR service initiated by the terminal device, and the first PDU session may be a PDU session configured for the XR service initiated by the terminal device.

Optionally, the XR service may be an ongoing XR service currently performed by the terminal device. The first DRB may be a DRB configured for the ongoing XR service of the terminal device, the first PDCP entity may be a PDCP entity configured for the ongoing XR service of the terminal device, the first QoS flow may be a QoS flow configured for the ongoing XR service of the terminal device, and the first PDU session may be a PDU session configured for the ongoing XR service of the terminal device.

Optionally, a manner in which the terminal device learns of the DRB, the PDCP entity, the QoS flow, or the PDU session corresponding to the XR service may be explicit or implicit.

For example, that the first DRB is the DRB corresponding to the XR service of the terminal device may alternatively be replaced with that the first DRB is a DRB associated with sixth indication information. Similarly, that the first PDCP entity is the PDCP entity corresponding to the XR service of the terminal device may alternatively be replaced with that the first PDCP entity is a PDCP entity associated with the sixth indication information. That the first QoS flow is the QoS flow corresponding to the XR service of the terminal device may alternatively be replaced with that the first QoS flow is a QoS flow associated with the sixth indication information. That the first PDU session is the PDU session corresponding to the XR service of the terminal device may alternatively be replaced with that the first PDU session is a PDU session associated with the sixth indication information.

The sixth indication information indicates that the DRB, the PDCP entity, the QoS flow, or the PDU session is a PDU session of the XR service. For example, the sixth indication information indicates that the first QoS flow is a QoS flow of the XR service.

Alternatively, the sixth indication information indicates a DRB, a PDCP entity, a QoS flow, or a PDU session on which PDU set-based processing needs to be performed. For example, the sixth indication information indicates that the PDU set-based processing needs to be performed on the first DRB, the first PDCP entity, the first QoS flow, or the first PDU session (for example, the sixth indication information is a PDU set marking indicator (PDU set marking indicator)).

In other words, the sixth indication information is information related to PDU set processing. For example, the sixth indication information is protocol description information, or a 5G QoS identifier (5QI).

In another example, the terminal device may determine, from a first granularity of the associated sixth indication information, whether a second granularity is the XR service, or determine whether the second granularity is associated with the sixth indication information. The first granularity and the second granularity each may be a DRB, a PDCP entity, a QoS flow, or a PDU session. The first granularity is different from the second granularity. For example, the first granularity is a QoS flow, and the second granularity is a DRB. For example, the terminal device may determine, based on that the first QoS flow is associated with the sixth indication information, that the first DRB is also associated with the sixth indication information.

For another example, for a PDU session for which uplink service information (including the first indication information) needs to be reported, the terminal device includes an identifier of the PDU session in the uplink service information, and includes the first indication information in the uplink service information. The first indication information indicates a capability of the terminal device to identify a PDU set for a QoS flow of the PDU session.

During implementation, when the terminal device initiates an XR service, the terminal device may establish a PDU session corresponding to the XR service with a first network device. The first network device may further send, to the second network device, QoS flow information or PDU session information corresponding to the XR service.

Optionally, the first network device may be a core network device. For example, the first network device may be an AMF or a UPF.

It may be understood that before step 300, the second network device may send first configuration information to the terminal device, where the first configuration information includes configuration information associated with at least one of the first DRB, the first PDCP entity, the first QoS flow, and the first PDU session. After receiving the first configuration information, the terminal device determines the first indication information based on the first configuration information.

The second network device may send the first configuration information to the terminal device by using at least one of the following messages:
a radio resource control (radio resource control, RRC) reconfiguration message, an RRC connection establishment message, an RRC connection resume message, or an RRC connection re-establishment message.

In embodiments of this application, that the terminal device identifies the PDU set includes at least one of the following:

The terminal device identifies a PDU included in the PDU set, the terminal device identifies PSI (PDU Set Importance, PDU set importance) of the PDU set, and the terminal device supports the PDU set-based processing.

Specifically,
A. That the terminal device identifies the PDU included in the PDU set may be that the terminal device identifies a last PDU and/or a 1^{st} PDU in the PDU set. For example, when the terminal device identifies the last PDU in the PDU set, for any PDU set, a PDU included in the PDU set may be determined based on an identified last PDU in a previous PDU set and an identified last PDU in the PDU set. A manner in which the terminal device obtains the importance of the PDU set may be interpreting a header of a higher-layer data packet, or identifying the importance of the PDU set through traffic detection. For specific descriptions, refer to specific descriptions of a capability 1 and a capability 2 in the following capability information of the terminal device. Details are not described herein again.
B. That the terminal device identifies the PSI of the PDU set may be understood as that the terminal device obtains importance information corresponding to the PDU set (or referred to as a type of the PDU set or a priority of the PDU set). For example, importance of a PDU set may be classified into 16 levels, which are respectively indicated by using 0 to 15. A smaller value indicates that the PDU set is more important. A manner in which the terminal device obtains the importance of the PDU set may be interpreting a header of a higher-layer data packet. For example, the terminal device may obtain the PSI of the PDU set by using an RTP extension header included in the PDU set. For example, in the RTP extension header, 4 bits may indicate the PSI, and a value of the PSI may be 0 to 15. A smaller value of the PSI may indicate that a corresponding PDU set is more important. For another example, the terminal device may alternatively obtain the importance information of the PDU set in another manner, including but not limited to obtaining the importance information of the PDU set by using a traffic characteristic. Optionally, a type of the PDU set may include an important PDU set and an unimportant PDU set, include an I frame and a P frame, include an I slice and a P slice, or the like.
C. The PDU set-based processing of the terminal device may include PDU set-based discarding of the terminal device. For example, when a network device is congested, the terminal device may discard a PDU included in some PDU sets. The terminal device may discard a PDU in a PDU set with low importance. For another example, when a timer associated with a PDU set expires or a timer associated with a PDU in the PDU set expires, the terminal device may discard a PDU included in the PDU set. The timer may be a discard timer. For another example, if the terminal device may discard one or more PDUs in a PDU set, the terminal device may discard a remaining PDU in the PDU set. The PDU set-based processing of the terminal device may further include other processing, for example, sending a data buffer size to a network device based on the PDU set, or starting a timer (for example, a discard timer) based on the PDU set. This is not limited herein.

In a possible implementation, the terminal device may determine the first indication information in the following manner:
The terminal device determines the first indication information based on application information of the XR service and/or the capability information of the terminal device.

The capability information of the terminal device indicates a capability of the terminal device related to the PDU set identification. For example, the capability information of the terminal device may be a specific capability of the terminal device, is at a granularity of the terminal device, and is irrelevant to an XR service currently initiated by the terminal device.

Optionally, the capability information of the terminal device may include the following capabilities:
Capability 1: The terminal device supports a capability of identifying the PDU set according to a first protocol. The first protocol includes at least one of RTP, a hypertext transfer protocol (hypertext transfer protocol, HTTP), UDP, and IP. The RTP protocol may further include an SRTP protocol, and the IP protocol may further include an IPsec protocol.

The capability of identifying the PDU set by the terminal device according to the first protocol may be understood as a capability of identifying the PDU set by the terminal device when an XR service data packet corresponding to the PDU set is processed according to the first protocol.

The capability information of the terminal device may include a capability of parsing the first protocol by the terminal device. When the terminal device can parse the first protocol, the terminal device is able to identify the PDU set. When the terminal device cannot parse the first protocol, the terminal device is not able to identify the PDU set.

For example, when the first protocol is RTP, the PDU set includes an RTP extension header, where the RTP extension header may be a 1-byte RTP extension header or a 2-byte RTP extension header. The RTP extension header may include the following fields:
E field: End PDU of the PDU Set, which may occupy 1 bit and indicates whether the PDU is a last PDU in the PDU set;
EDB field: End of Data Burst, which may occupy 3 bits and indicates an end of a data burst; and
PSI field: It may occupy 4 bits, and indicates importance of a corresponding PDU set compared with another PDU set. A value range of the PSI may be 0 to 15. A smaller value indicates that the PDU set is more important.

The terminal device may identify, based on the E field in the RTP extension header, the PDU included in the PDU set, and the terminal device may identify the PSI of the PDU set based on the PSI field in the RTP extension header.

Capability 2: The terminal device supports a capability of identifying the PDU set based on traffic detection.

The terminal device may identify a PDU set by detecting an interval between different PDUs. For example, the terminal device may consider a PDU that arrives in short duration as a PDU that belongs to one PDU set. In some implementations, the terminal device may identify a PDU in one data burst as one PDU set. In addition, the terminal device may determine PSI of a PDU set based on a data amount of the identified PDU set. For example, the terminal device identifies a PDU in one data burst as one PDU set, and determines importance of the PDU set based on a data amount in the data burst. For example, a larger data amount in a data burst indicates more importance of a corresponding PDU set.

Optionally, the terminal device may receive second indication information sent by the first network device, where the second indication information indicates the application information of the XR service. The terminal device determines the application information of the XR service based on the received second indication information.

For example, the application information of the XR service includes information such as a higher-layer protocol and a header format that are used by the XR service. The higher-layer protocol may be a protocol used by the terminal device to process XR service data before the XR service data is transmitted to an AS. For example, the higher-layer protocol includes but is not limited to RTP, RTPC, UDP, TCP, and IP. The header format of the XR service may include whether a header is encrypted (for example, SRTP or IPsec). For example, when the header is encrypted, the terminal device is not able to identify a PDU set of the XR service by parsing content in the header.

For example, the first network device may send the second indication information to the terminal device by using a non-access stratum (non-access stratum, NAS) message. The NAS message may be a PDU session establishment accept message or a PDU session modification accept message.

During implementation, the first network device may obtain the application information of the XR service from an application server. The application server may be a server corresponding to the XR service initiated by the terminal device.

For example, the terminal device starts the XR service, and an application layer of the terminal device may communicate with the application server through the second network device and the first network device. For example, the terminal device may initiate a PDU session establishment request for the XR service, and implement communication between the terminal device and the application server by using an established PDU session; or the terminal device may communicate with the application server through data plane interaction. The application server may indicate the application information of the XR service to the first network device (for example, a PCF in a core network), and the application information that is of the XR service and that is indicated by the application server may be associated with a specific PDU session or a specific QoS flow (for example, the specific PDU session may be a PDU session corresponding to the XR service initiated by the terminal device, or the specific QoS flow may be a QoS flow corresponding to the XR service initiated by the terminal device).

Alternatively, the first network device may obtain the application information of the XR service in another manner. An implementation in which the first network device obtains the application information of the XR service is not limited in embodiments of this application.

When the terminal device determines the first indication information, in a possible implementation, the terminal device may compare the application information of the XR service with the capability information of the terminal device, to determine whether the PDU set can be identified for the XR service; and generate the first indication information based on a determining result.

For example, if the application information of the XR service is that the XR service uses the RTP protocol and the header format is an RTP extension header, and the capability information of the terminal device includes that the terminal device supports a capability of identifying the PDU set according to RTP, the terminal device determines that the PDU set can be identified, and generates the first indication information indicating that the terminal device is able to identify the PDU set.

In another possible implementation, the terminal device may alternatively determine the first indication information in the following manner:
The terminal device may attempt to identify the PDU set in a PDU set identification manner supported by the terminal device. When the terminal device traverses all manners supported by the terminal device but still is not able to identify the PDU set, the terminal device determines that the first indication information is that the terminal device is not able to identify the PDU set; otherwise, the terminal device determines that the first indication information is that the terminal device is able to identify the PDU set. The PDU set identification manner supported by the terminal device may include the foregoing PDU set identification according to the first protocol and the foregoing PDU set identification based on the traffic detection, and may further include another manner. This is not limited herein.

It should be noted that, in the manner, provided in embodiments of this application, in which the terminal device determines the first indication information, after the XR service is established, the terminal determines whether the terminal device is able to identify the PDU set for the XR service.

In embodiments of this application, the terminal device may include, in at least one of the following messages, the first indication information sent to the second network device:
a UE assistance information message, an RRC reconfiguration complete message, an RRC connection establishment complete message, and an RRC connection resume complete message.

In a possible implementation, the first indication information is not included in a UE capability information message.

In a possible implementation, the terminal device sends a first capability, where the first capability indicates whether the terminal device supports the PDU set-based processing. Optionally, the first capability is included in the UE capability information message. Optionally, when the first capability indicates that the terminal device supports the PDU set-based processing, the terminal device sends the first indication information; and/or when the first capability indicates that the terminal device does not support the PDU set-based processing, the terminal device does not send the first indication information.

After receiving the first indication information, the second network device sends configuration information to the terminal device, where the configuration information indicates processing performed by the terminal device on the PDU set.

Optionally, the processing that is on the PDU set and that is indicated by the configuration information includes processing on a PDU set corresponding to at least one of the first DRB, the first PDCP entity, the first QoS flow, and the first PDU session.

The PDU set corresponding to the at least one of the first DRB, the first PDCP entity, the first QoS flow, and the first PDU session may be a PDU set corresponding to an XR service currently initiated by the terminal device.

The processing that is on the PDU set and that is indicated by the configuration information may include discarding based on the PDU set. For example, when network congestion occurs, the configuration information indicates that the terminal device may discard a PDU included in some PDU sets, for example, indicates that the terminal device may discard a PDU in a PDU set whose PDU set importance satisfies a condition. That the PDU set importance satisfies the condition may include: The importance of the PDU set is greater than or equal to an importance threshold N (for example, N is a positive integer greater than or equal to 0). Alternatively, the configuration information indicates the terminal device to perform discarding based on a PDU set granularity when a timer associated with a PDU set expires or a timer associated with a PDU in the PDU set expires. For example, the terminal device may discard the PDU included in the PDU set. The timer may be a discard timer. For another example, if the terminal device may discard one or more PDUs in a PDU set, the terminal device may discard a remaining PDU in the PDU set. For another example, the configuration information may further indicate the terminal device to send a data buffer size based on the PDU set, or start a timer (for example, a discard timer) based on the PDU set.

For example, when the first indication information indicates that the terminal device is able to identify the PDU set, the second network device sends PDU set-based discarding configuration information to the terminal device. For example, when the first indication information indicates that the terminal device is able to identify the PDU set for the first QoS flow, the second network device sends PDU set-based discarding configuration information of the first QoS flow to the terminal device.

In another example, when the first indication information indicates that the terminal device is able to identify the PDU set at a first granularity, the second network device sends second-granularity PDU set-based processing configuration information to the terminal device. The first granularity and a second granularity each may be a DRB, a PDCP entity, a QoS flow, or a PDU session. The first granularity is different from the second granularity. For example, the first granularity is a QoS flow, and the second granularity is a PDCP entity (or a DRB). For example, when the first indication information indicates that the terminal device is able to identify the PDU set for the first QoS flow, the second network device sends, to the terminal device, PDU set-based discarding configuration information of a PDCP entity (or a DRB) associated with the first QoS flow.

In a possible implementation, the second network device receives the first capability of the terminal device, where the first capability indicates whether the terminal device supports the PDU set-based processing. The PDU set-based processing may include PDU set-based discarding, PDU set-based data amount reporting, or the like. Optionally, the first capability is included in the UE capability information message. The terminal device sends the first capability to the second network device by using the UE capability information message, and the second network device determines, by using the first capability, a PDU set-based processing capability of the terminal device. However, before receiving the first indication information, the second network device cannot send the configuration information to the terminal device. After receiving the first indication information sent by the terminal device, the second network device determines, based on the first indication information, a capability of the terminal device to identify the PDU set for the first DRB, the first PDCP, the first QoS flow, or the first PDU session, and correspondingly sends the configuration information to the terminal device.

For example, the first capability indicates that the terminal device supports the PDU set-based processing. Before receiving the first indication information, the second network device does not send PDU set-based processing configuration information to the terminal device. The second network device receives the first indication information sent by the terminal device. For example, when the first indication information indicates that the terminal device supports identification of the PDU set for the first QoS flow, the second network device may send, to the terminal device, PDU set-based processing configuration information of the first QoS flow (or a PDCP or a DRB associated with the first QoS flow). For another example, when the first indication information indicates that identification of the PDU set for the second QoS flow is not supported, the second network device does not send PDU set-based processing configuration information of the second QoS flow (or a PDCP or a DRB associated with the second QoS flow) to the terminal device. In other words, the second network device needs to determine the configuration information based on the first indication information and the first capability after receiving the first indication information. Optionally, when the first capability indicates that the terminal device does not support the PDU set-based processing, the second network device does not send the PDU set-based processing configuration information to the terminal device.

With reference to FIG. 4, the following describes an overall procedure of the communication method provided in this embodiment of this application. The following steps may be included.

Step 400: A terminal device starts an XR service, to interact with an application server.

Step 401: The application server indicates application information of the XR service to a first network device.

The application information that is of the XR service and that is indicated by the application server is associated with a specific PDU session or a specific QoS flow. For example, the application information that is of the XR service and that is indicated by the application server is associated with the first PDU session or the first QoS flow in the foregoing descriptions.

It should be noted that step 400 and step 401 are optional steps, and a manner in which the first network device determines the application information of the XR service provided in step 400 and step 401 is an optional manner. In embodiments of this application, the first network device may alternatively determine the application information of the XR service in another manner.

Step 402: The first network device sends second indication information to the terminal device.

The second indication information indicates the application information of the XR service.

Step 403: The terminal device determines whether a PDU set can be identified for the XR service.

Optionally, the terminal device may determine, based on the application information of the XR service and/or capability information, whether the PDU set can be identified for the XR service. For a specific implementation, refer to the foregoing descriptions.

It should be noted that the terminal device may alternatively determine, in another manner, whether the PDU set can be identified for the XR service. For example, the terminal device may attempt to identify the PDU set in a PDU set identification manner supported by the terminal device. When the terminal device traverses all manners supported by the terminal device but still is not able to identify the PDU set, the terminal device determines that the PDU set cannot be identified; otherwise, the terminal device determines that the PDU set can be identified.

Step 404: The first network device sends, to a second network device, QoS flow information or PDU session information corresponding to the XR service.

Step 405: The second network device sends, to the terminal device, a configuration related to the XR service.

The configuration related to the XR service may include but is not limited to a DRB-related configuration, a PDCP entity-related configuration, a QoS flow-related configuration, and a PDU session-related configuration.

An execution sequence of step 404 and step 405, and step 402 and step 403 is not limited.

Step 406: The terminal device sends first indication information to the second network device.

The first indication information may be generated based on a determining result of the terminal device in step 403. For example, the first indication information indicates that the terminal device is able to identify the PDU set.

The first indication information may be associated with at least one of a first DRB, a first PDCP entity, a first QoS flow, and a first PDU session that correspond to the XR service. Alternatively, it may be understood that a granularity of the first indication information is at least one of the first DRB, the first PDCP entity, the first QoS flow, and the first PDU session that correspond to the XR service.

Step 407: The second network device sends configuration information to the terminal device.

The configuration information may indicate processing performed by the terminal device on the PDU set.

Optionally, the configuration information may be determined by the second network device based on the first indication information included in third indication information. For example, when the first indication information indicates that the terminal device is able to identify the PDU set, the configuration information may indicate the terminal device to discard the PDU set.

An embodiment of this application further provides a communication method, which may be used to determine whether a terminal device is able to identify a PDU set. An example in which a terminal device and a network device are execution bodies is used below for description. However, the execution bodies may alternatively be a module (for example, a chip) used in the terminal device and a module (for example, a chip) used in the network device. Processing performed by a single execution entity shown in this embodiment of this application may alternatively be performed by a plurality of execution entities. These execution entities may be logically and/or physically separated. For example, processing performed by the network device may be performed by at least one of a CU, a DU, and an RU.

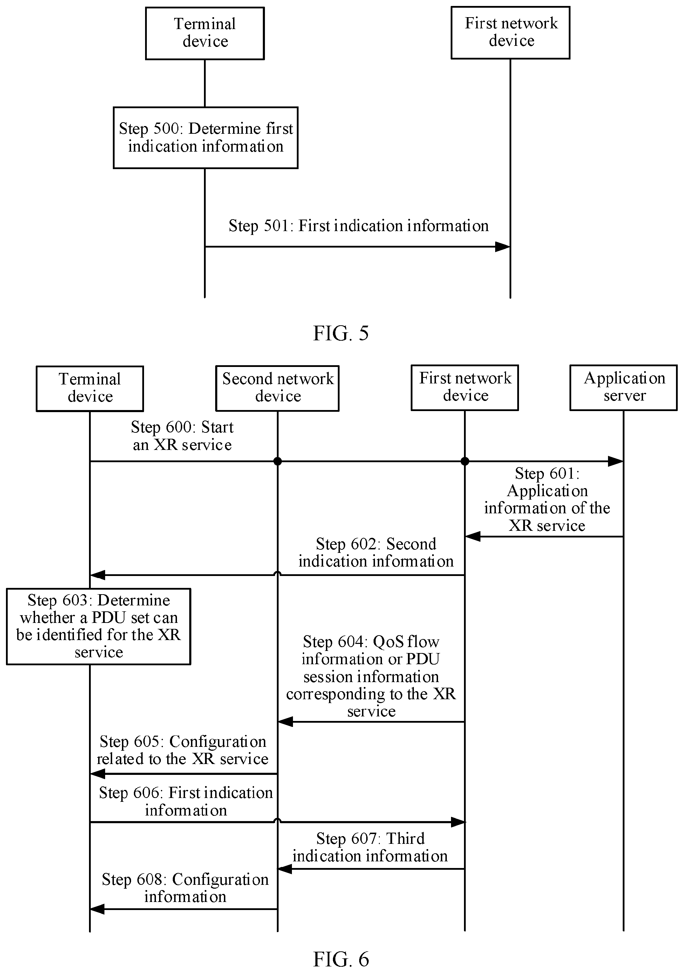

As shown in FIG. 5, the method may include the following steps.

Step 500: A terminal device determines first indication information.

Step 501: The terminal device sends the first indication information to a first network device.

Correspondingly, the first network device receives the first indication information.

The first network device may be a core network device. For example, the first network device may be an AMF or a UPF.

Optionally, the first indication information may indicate that the terminal device is able to identify a PDU set, the first indication information may indicate that the terminal device is not able to identify a PDU set, or the first indication information may indicate a capability of the terminal device to identify a PDU set.

For example, if the terminal device is able to identify the PDU set, the terminal device sends the first indication information to the first network device. Correspondingly, after receiving the first indication information, the first network device determines that the terminal is able to identify the PDU set.

Alternatively, if the terminal device is not able to identify the PDU set, the terminal device sends the first indication information to the first network device. Correspondingly, after receiving the first indication information, the first network device determines that the terminal is not able to identify the PDU set.

Alternatively, the terminal device may indicate, by using an information bit in the first indication information, whether the terminal device is able to identify the PDU set. For example, when a value of the information bit of the first indication information is a first value (for example, 1), it indicates that the terminal device is able to identify the PDU set; or when a value of the information bit of the first indication information is a second value (for example, 0), it indicates that the terminal device is not able to identify the PDU set.

Optionally, the first indication information indicates that the terminal device is able to identify a PDU set in a first range, the first indication information indicates that the terminal device is not able to identify a PDU set in a first range, or the first indication information indicates a capability of the terminal device to identify a PDU set in a first range. The first range may be determined based on a division granularity of the PDU set. Optionally, the first range is obtained through division based on different services (for example, XR services), or services (for example, XR services) associated with the PDU set in the first range are the same.

Optionally, the first indication information is associated with one or more of the following:
a first QoS flow and a first PDU session.

That the first indication information is associated with at least one of the first QoS flow and the first PDU session may be understood as that a granularity of the first indication information may be the first QoS flow or the first PDU session.

That the first indication information is associated with the first QoS flow may also be understood as that the first indication information indicates a capability of the terminal device to identify a PDU set for the first QoS flow. An indication manner of the first indication information may include but is not limited to the following:
Indication manner 1a: The first indication information may include an identifier of the first QoS flow and information indication content. For example, the information indication content may be "0", where "0" indicates that the terminal device is able to or is not able to identify the PDU set corresponding to the first QoS flow. Correspondingly, the first indication information may further include an identifier of a second QoS flow and information indication content, to indicate a capability of the terminal device to identify a PDU set for the second QoS flow.

Indication manner 1b: The first indication information may include an identifier corresponding to the first QoS flow. For example, when the first indication information includes the identifier corresponding to the first QoS flow, the first indication information may indicate that the terminal device is able to or is not able to identify the PDU set corresponding to the first QoS flow. Optionally, each QoS flow may have a corresponding identifier, and the identifier corresponding to the QoS flow is carried in the first indication information, to indicate a capability of the terminal device to identify a PDU set corresponding to the QoS flow.

That the first indication information is associated with the first PDU session may also be understood as that the first indication information indicates a capability of the terminal device to identify a PDU set for the first PDU session. An indication manner of the first indication information may include but is not limited to the following:
Indication manner 2a: The first indication information may include an identifier of the first PDU session and information indication content. For example, the information indication content may be "0", where "0" indicates that the terminal device is able to or is not able to identify the PDU set corresponding to the first PDU session. Correspondingly, the first indication information may further include an identifier of a second PDU session and information indication content, to indicate a capability of the terminal device to identify a PDU set for the second PDU session.

Indication manner 2b: The first indication information may include an identifier corresponding to the first PDU session. For example, when the first indication information includes the identifier corresponding to the first PDU session, the first indication information may indicate that the terminal device is able to or is not able to identify the PDU set corresponding to the first PDU session. Optionally, each PDU session may have a corresponding identifier, and the identifier corresponding to the PDU session is carried in the first indication information, to indicate a capability of the terminal device to identify a PDU set corresponding to the PDU session.

The capability of the terminal device to identify the PDU set includes: The terminal device is able to identify the PDU set, or the terminal device is not able to identify the PDU set.

Optionally, the first QoS flow may be a QoS flow corresponding to the XR service of the terminal device, and the first PDU session may be a PDU session corresponding to the XR service of the terminal device. Alternatively, the first QoS flow may be a QoS flow corresponding to the XR service, and the first PDU session may be a PDU session corresponding to the XR service.

Optionally, the first QoS flow and the first PDU session are a first QoS flow and a first PDU session of an uplink service.

Optionally, the XR service may be an XR service currently initiated by the terminal device. The first QoS flow may be a QoS flow configured for the XR service initiated by the terminal device, and the first PDU session may be a PDU session configured for the XR service initiated by the terminal device.

Optionally, the XR service may be an ongoing XR service currently performed by the terminal device. The first QoS flow may be a QoS flow configured for the ongoing XR service of the terminal device, and the first PDU session may be a PDU session configured for the ongoing XR service of the terminal device.

Optionally, a manner in which the terminal device learns of the QoS flow or the PDU session corresponding to the XR service may be explicit or implicit.

For example, that the first QoS flow is the QoS flow corresponding to the XR service of the terminal device may alternatively be replaced with that the first QoS flow is a QoS flow associated with sixth indication information. That the first PDU session is the PDU session corresponding to the XR service of the terminal device may alternatively be replaced with that the first PDU session is a PDU session associated with the sixth indication information.

The sixth indication information indicates that the QoS flow or the PDU session is a PDU session of the XR service. For example, the sixth indication information indicates that the first QoS flow is a QoS flow of the XR service.

Alternatively, the sixth indication information indicates a QoS flow or a PDU session on which PDU set-based processing needs to be performed. For example, the sixth indication information indicates that the PDU set-based processing needs to be performed on the first QoS flow or the first PDU session (for example, the sixth indication information is a PDU set marking indicator (PDU set marking indicator)).

In other words, the sixth indication information is information related to PDU set processing. For example, the sixth indication information is protocol description information, or a 5G QoS identifier (5QI).

In another example, the terminal device may determine, from a first granularity of the associated sixth indication information, whether a second granularity is the XR service, or determine whether the second granularity is associated with the sixth indication information. The first granularity and the second granularity each may be a QoS flow or a PDU session. The first granularity is different from the second granularity. For example, the first granularity is a QoS flow, and the second granularity is a PDU session. For example, the terminal device may determine, based on that the first QoS flow is associated with the sixth indication information, that the first PDU session is also associated with the sixth indication information.

For another example, for a PDU session for which uplink service information (including the first indication information) needs to be reported, the terminal device includes an identifier of the PDU session in the uplink service information, and includes the first indication information in the uplink service information. The first indication information indicates a capability of the terminal device to identify a PDU set for a QoS flow of the PDU session.

During implementation, when the terminal device initiates an XR service, the terminal device may establish a PDU session corresponding to the XR service with a first network device. The first network device may further send, to a second network device, QoS flow information or PDU session information corresponding to the XR service. Correspondingly, the second network device determines, based on the QoS flow information or the PDU session information that corresponds to the XR service and that is sent by the first network device, first configuration information related to the XR service, and sends the first configuration information to the terminal device. The first configuration information includes configuration information related to a DRB, a PDCP entity, a QoS flow, and a PDU session that correspond to the XR service.

Optionally, the second network device may be an access network device. For example, the second network device may be a base station.

The first network device may send, to the terminal device by using at least one of the following messages, the QoS flow information or the PDU session information corresponding to the XR service:
a PDU session establishment accept message or a PDU session modification accept message.

In embodiments of this application, that the terminal device identifies the PDU set includes at least one of the following:
The terminal device identifies a PDU included in the PDU set, the terminal device identifies PSI of the PDU set, and the terminal device supports the PDU set-based processing.

For specific explanations of identifying the PDU set by the terminal device, refer to the descriptions in the foregoing first communication method. Details are not described herein again.

In a possible implementation, the terminal device may determine the first indication information in the following manner:
The terminal device determines the first indication information based on application information of the XR service and/or the capability information of the terminal device.

The capability information of the terminal device indicates a capability of the terminal device related to the PDU set identification. For example, the capability information of the terminal device may be a specific capability of the terminal device, is at a granularity of the terminal device, and is irrelevant to an XR service currently initiated by the terminal device.

Optionally, the capability information of the terminal device may include the following capabilities:
Capability 1: The terminal device supports a capability of identifying the PDU set according to a first protocol. The first protocol includes at least one of RTP, HTTP, UDP, and IP. The RTP protocol may further include an SRTP protocol, and the IP protocol may further include an IPsec protocol.

The capability of identifying the PDU set by the terminal device according to the first protocol may be understood as a capability of identifying the PDU set by the terminal device when an XR service data packet corresponding to the PDU set is processed according to the first protocol.

The capability information of the terminal device may include a capability of parsing the first protocol by the terminal device. When the terminal device can parse the first protocol, the terminal device is able to identify the PDU set. When the terminal device cannot parse the first protocol, the terminal device is not able to identify the PDU set.

Capability 2: The terminal device supports a capability of identifying the PDU set based on traffic detection.

For specific descriptions of the capability information of the terminal device, refer to the descriptions of the capability 1 and the capability 2 in the foregoing first communication method. Details are not described herein again.

Optionally, the terminal device may receive second indication information sent by the first network device, where the second indication information indicates the application information of the XR service. The terminal device determines the application information of the XR service based on the received second indication information.

For example, the application information of the XR service includes information such as a higher-layer protocol and a header format that are used by the XR service. The higher-layer protocol may be a protocol used by the terminal device to process XR service data before the XR service data is transmitted to an AS. For example, the higher-layer protocol includes but is not limited to RTP, RTPC, UDP, TCP, and IP. The header format of the XR service may include whether a header is encrypted (for example, SRTP or IPsec). For example, when the header is encrypted, the terminal device is not able to identify a PDU set of the XR service by parsing content in the header.

For example, the first network device may send the second indication information to the terminal device by using a NAS message. The NAS message may be a PDU session establishment accept message or a PDU session modification accept message.

During implementation, the first network device may obtain the application information of the XR service from an application server. The application server may be a server corresponding to the XR service initiated by the terminal device. For a specific implementation in which the first network device obtains the application information of the XR service from the application server, refer to the descriptions in the foregoing first communication method. Details are not described herein again.

Alternatively, the first network device may obtain the application information of the XR service in another manner. An implementation in which the first network device obtains the application information of the XR service is not limited in embodiments of this application.

When the terminal device determines the first indication information, in a possible implementation, the terminal device may compare the application information of the XR service with the capability information of the terminal device, to determine whether the PDU set can be identified for the XR service; and generate the first indication information based on a determining result.

In another possible implementation, the terminal device may alternatively determine the first indication information in the following manner:
The terminal device may attempt to identify the PDU set in a PDU set identification manner supported by the terminal device. When the terminal device traverses all manners supported by the terminal device but still is not able to identify the PDU set, the terminal device determines that the first indication information is that the terminal device is not able to identify the PDU set; otherwise, the terminal device determines that the first indication information is that the terminal device is able to identify the PDU set. The PDU set identification manner supported by the terminal device may include the foregoing PDU set identification according to the first protocol and the foregoing PDU set identification based on the traffic detection, and may further include another manner. This is not limited herein.

In embodiments of this application, the terminal device may send the first indication information to the first network device by using a NAS message. The NAS message may be a PDU session establishment request message or a PDU session modification request message.

In a possible implementation, the first indication information is not included in a UE capability information message.

In a possible implementation, the terminal device sends a first capability, where the first capability indicates whether the terminal device supports the PDU set-based processing. Optionally, the first capability is included in the UE capability information message. Optionally, when the first capability indicates that the terminal device supports the PDU set-based processing, the terminal device sends the first indication information; and/or when the first capability indicates that the terminal device does not support the PDU set-based processing, the terminal device does not send the first indication information.

Optionally, in this application, the terminal device is a terminal device that supports reporting of uplink service information. The terminal device may send the first indication information when at least one of the following is satisfied: the terminal device is configured to send the uplink service information, the first indication information is changed, or a timer satisfies a condition. For example, the terminal device receives seventh indication information, where the seventh indication information indicates or requests the terminal device to report the uplink service information. The uplink service information includes the first indication information. For another example, when the first indication information is different from first indication information sent last time (for example, when a configuration of a DRB, a PDCP, a QoS flow, or a PDU session is added or changed), the terminal device sends the first indication information. For another example, when the timer expires, the terminal device sends the first indication information. Optionally, during running of the timer, the terminal device does not send the first indication information. The timer is configured to control sending of the first indication information.

After the first network device receives the first indication information, the first network device may send third indication information to the second network device. The third indication information indicates indication information related to the PDU set.

Correspondingly, the second network device receives the third indication information sent by the first network device.

The third indication information may include the first indication information. After receiving the third indication information, the second network device may determine, based on the first indication information included in the third indication information, that the terminal device is able to identify the PDU set, or the second network device may determine, based on the first indication information included in the third indication information, that the terminal device is not able to identify the PDU set.

Alternatively, the third indication information may include requirement information related to the PDU set, for example, delay requirement information of the PDU set. The second network device may perform corresponding configuration on the terminal device based on the delay requirement information of the PDU set.

After the second network device determines, from the third indication information, the capability of identifying the PDU set by the terminal device, the second network device may send configuration information to the terminal device, where the configuration information indicates processing performed by the terminal device on the PDU set.

Optionally, the processing that is on the PDU set and that is indicated by the configuration information includes processing on a PDU set corresponding to at least one of a first DRB, a first PDCP entity, a first QoS flow, and a first PDU session.

The PDU set corresponding to the at least one of the first DRB, the first PDCP entity, the first QoS flow, and the first PDU session may be a PDU set corresponding to an XR service currently initiated by the terminal device.

The processing that is on the PDU set and that is indicated by the configuration information may include discarding based on the PDU set. For specific indication content indicated by the configuration information, refer to the foregoing descriptions in the foregoing first communication method. Details are not described herein again.

For example, when the first indication information indicates that the terminal device is able to identify the PDU set, the second network device sends PDU set-based discarding configuration information to the terminal device. For example, when the first indication information indicates that the terminal device is able to identify the PDU set for the first QoS flow, the second network device sends PDU set-based discarding configuration information of the first QoS flow to the terminal device.

In another example, when the first indication information indicates that the terminal device is able to identify a PDU set at a first granularity, the second network device sends second-granularity PDU set-based processing configuration information to the terminal device. The first granularity and a second granularity each may be a DRB, a PDCP entity, a QoS flow, or a PDU session. The first granularity is different from the second granularity. For example, the first granularity is a QoS flow, and the second granularity is a PDCP entity (or a DRB). For example, when the first indication information indicates that the terminal device is able to identify the PDU set for the first QoS flow, the second network device sends, to the terminal device, PDU set-based discarding configuration information of a PDCP entity (or a DRB) associated with the first QoS flow.

In a possible implementation, the second network device receives the first capability of the terminal device, where the first capability indicates whether the terminal device supports the PDU set-based processing. The PDU set-based processing may include PDU set-based discarding, PDU set-based data amount reporting, or the like. Optionally, the first capability is included in the UE capability information message. The terminal device sends the first capability to the second network device by using the UE capability information message, and the second network device determines, by using the first capability, a PDU set-based processing capability of the terminal device. However, before receiving the first indication information, the second network device cannot send the configuration information to the terminal device. After receiving the first indication information sent by the first network device, the second network device determines, based on the first indication information, a capability of the terminal device to identify the PDU set for the first DRB, the first PDCP, the first QoS flow, or the first PDU session, and correspondingly sends the configuration information to the terminal device.

For example, the first capability indicates that the terminal device supports the PDU set-based processing. Before receiving the first indication information, the second network device does not send PDU set-based processing configuration information to the terminal device. The second network device receives the first indication information sent by the first network device. For example, when the first indication information indicates that the terminal device supports identification of the PDU set for the first QoS flow, the second network device may send, to the terminal device, PDU set-based processing configuration information of the first QoS flow (or a PDCP or a DRB associated with the first QoS flow). For another example, when the first indication information indicates that identification of the PDU set for the second QoS flow is not supported, the second network device does not send PDU set-based processing configuration information of the second QoS flow (or a PDCP or a DRB associated with the second QoS flow) to the terminal device. In other words, the second network device needs to determine the configuration information based on the first indication information and the first capability after receiving the first indication information. Optionally, when the first capability indicates that the terminal device does not support the PDU set-based processing, the second network device does not send the PDU set-based processing configuration information to the terminal device.

With reference to FIG. 6, the following describes an overall procedure of the communication method provided in this embodiment of this application. The following steps may be included.

Step 600: A terminal device starts an XR service, to interact with an application server.

Step 601: The application server indicates application information of the XR service to a first network device.

The application information that is of the XR service and that is indicated by the application server is associated with a specific PDU session or a specific QoS flow. For example, the application information that is of the XR service and that is indicated by the application server is associated with the first PDU session or the first QoS flow in the foregoing descriptions.

It should be noted that step 600 and step 601 are optional steps, and a manner in which the first network device determines the application information of the XR service provided in step 600 and step 601 is an optional manner. In embodiments of this application, the first network device may alternatively determine the application information of the XR service in another manner.

Step 602: The first network device sends second indication information to the terminal device.

The second indication information indicates the application information of the XR service.

Step 603: The terminal device determines whether a PDU set can be identified for the XR service.

Optionally, the terminal device may determine, based on the application information of the XR service and/or capability information, whether the PDU set can be identified for the XR service. For a specific implementation, refer to the foregoing descriptions.

It should be noted that the terminal device may alternatively determine, in another manner, whether the PDU set can be identified for the XR service. For example, the terminal device may attempt to identify the PDU set in a PDU set identification manner supported by the terminal device. When the terminal device traverses all manners supported by the terminal device but still is not able to identify the PDU set, the terminal device determines that the PDU set cannot be identified; otherwise, the terminal device determines that the PDU set can be identified.

Step 604: The first network device sends, to a second network device, QoS flow information or PDU session information corresponding to the XR service.

Step 605: The second network device sends, to the terminal device, a configuration related to the XR service.

The configuration related to the XR service may include but is not limited to a DRB-related configuration, a PDCP entity-related configuration, a QoS flow-related configuration, and a PDU session-related configuration.

An execution sequence of step 604 and step 605, and step 602 and step 603 is not limited.

Step 606: The terminal device sends first indication information to the first network device.

The first indication information may be generated based on a determining result of the terminal device in step 603. For example, the first indication information indicates that the terminal device is able to identify the PDU set.

The first indication information may be associated with the first QoS flow and/or the first PDU session that correspond/corresponds to the XR service. Alternatively, it may be understood that a granularity of the first indication information is the first QoS flow and/or the first PDU session that correspond/corresponds to the XR service.

Step 607: The first network device sends third indication information to the second network device.

The third indication information indicates indication information related to the PDU set. For example, the third indication information includes the first indication information, or the third indication information may include delay requirement information of the PDU set.

Step 608: The second network device sends configuration information to the terminal device.

The configuration information may indicate processing performed by the terminal device on the PDU set.

Optionally, the configuration information may be determined by the second network device based on the first indication information included in third indication information. For example, when the first indication information indicates that the terminal device is able to identify the PDU set, the configuration information may indicate the terminal device to discard the PDU set.

An embodiment of this application further provides a communication method, which may be used to determine whether a terminal device is able to identify a PDU set. An example in which a terminal device and a network device are execution bodies is used below for description. However, the execution bodies may alternatively be a module (for example, a chip) used in the terminal device and a module (for example, a chip) used in the network device. Processing performed by a single execution entity shown in this embodiment of this application may alternatively be performed by a plurality of execution entities. These execution entities may be logically and/or physically separated. For example, processing performed by the network device may be performed by at least one of a CU, a DU, and an RU.

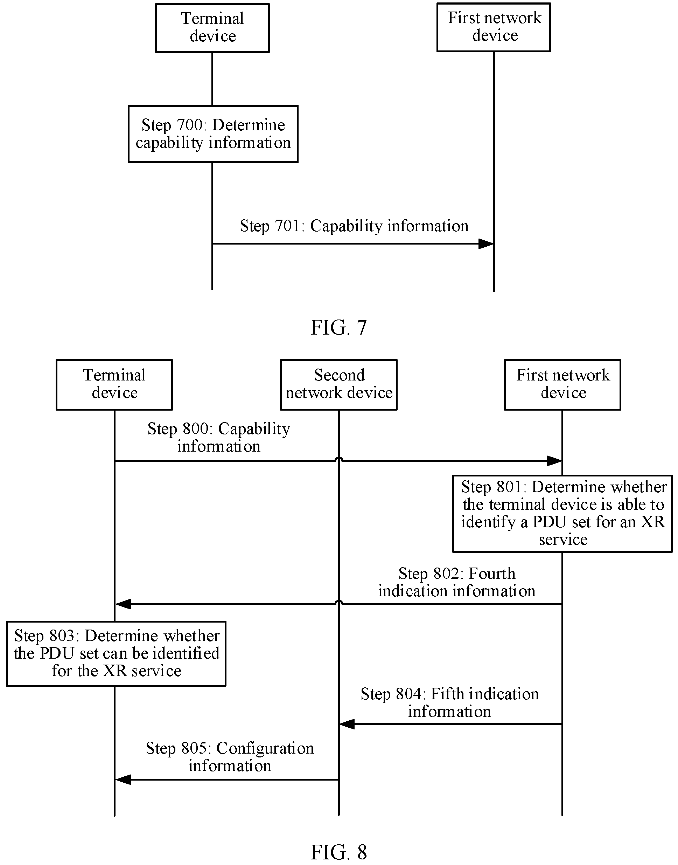

As shown in FIG. 7, the method may include the following steps.

Step 700: A terminal device determines capability information.

The capability information indicates a capability of the terminal device related to PDU set identification.

Optionally, the capability information of the terminal device may include the following capabilities:
Capability 1: The terminal device supports a capability of identifying a PDU set according to a first protocol. The first protocol includes at least one of RTP, HTTP, UDP, and IP. The RTP protocol may further include an SRTP protocol, and the IP protocol may further include an IPsec protocol.

The capability of identifying the PDU set by the terminal device according to the first protocol may be understood as a capability of identifying the PDU set by the terminal device when an XR service data packet corresponding to the PDU set is processed according to the first protocol.

The capability information of the terminal device may include a capability of parsing the first protocol by the terminal device. When the terminal device can parse the first protocol, the terminal device is able to identify the PDU set. When the terminal device cannot parse the first protocol, the terminal device is not able to identify the PDU set.

Capability 2: The terminal device supports a capability of identifying the PDU set based on traffic detection.

For specific descriptions of the capability information of the terminal device, refer to the descriptions of the capability 1 and the capability 2 in the foregoing first communication method. Details are not described herein again.

Step 701: The terminal device sends the capability information to a first network device.

Correspondingly, the first network device receives the capability information sent by the terminal device.

The first network device may be a core network device. For example, the first network device is an AMF or a UPF.

For example, the terminal device may send the capability information to the first network device by using a NAS message. For example, the terminal device may include the capability information in a PDU session establishment request message or a PDU session modification request message.

After the first network device receives the capability information sent by the terminal device, the first network device may determine, based on the capability information of the terminal device, that the terminal device is able to identify the PDU set for an XR service.

During implementation, the first network device may first receive the capability information of the terminal device. To start an XR service, the terminal device establishes the XR service of the terminal device, the first network device determines, based on the established XR service and the capability information reported by the terminal device, whether the terminal device is able to identify the PDU set for the XR service.

It should be noted that the capability information of the terminal device may be a specific capability of the terminal device, is at a granularity of the terminal device, and is irrelevant to the XR service currently initiated by the terminal device. Therefore, the step of reporting the capability information by the terminal device to the first network device is not limited to that after the XR service is established. The terminal device may first report the capability information. When the XR service is established, the first network device determines, based on the specific XR service and a capability previously reported by the terminal device, whether the terminal device is able to identify the PDU set for the XR service.

Optionally, the first network device may determine, in the following manners, that the terminal device is able to identify the PDU set for the XR service:
The first network device may determine, based on the capability information of the terminal device and/or application information of the XR service, whether the terminal device is able to identify the PDU set for the XR service.

For example, the application information of the XR service includes information such as a higher-layer protocol and a header format that are used by the XR service. The higher-layer protocol may be a protocol used by the terminal device to process XR service data before the XR service data is transmitted to an AS. For example, the higher-layer protocol includes but is not limited to RTP, RTPC, UDP, TCP, and IP. The header format of the XR service may include whether a header is encrypted (for example, SRTP or IPsec). For example, when the header is encrypted, the terminal device is not able to identify a PDU set of the XR service by parsing content in the header.

During implementation, the first network device may determine the application information of the XR service in a plurality of different manners.

For example, the first network device may obtain the application information of the XR service from an application server. The application server may be a server corresponding to the XR service initiated by the terminal device. For a specific implementation in which the first network device obtains the application information of the XR service from the application server, refer to the descriptions in the foregoing first communication method. Details are not described herein again. Alternatively, the first network device may obtain the application information of the XR service in another manner. An implementation in which the first network device obtains the application information of the XR service is not limited in embodiments of this application.

When the first network device determines whether the terminal device is able to identify the PDU set for the XR service, the first network device may compare the application information of the XR service with the capability information of the terminal device, to determine whether the PDU set can be identified for the XR service.

For example, if the application information of the XR service is that the XR service uses the RTP protocol and the header format is an RTP extension header, and the capability information of the terminal device is that the terminal device supports a capability of identifying the PDU set according to RTP, the first network device may determine that the terminal device is able to identify the PDU set for the XR service. If the application information of the XR service is that the XR service uses the UDP protocol, and the capability information of the terminal device is that the terminal device supports a capability of identifying the PDU set according to RTP, the first network device may determine that the terminal device is not able to identify the PDU set for the XR service.

In embodiments of this application, that the terminal device identifies the PDU set includes at least one of the following:
The terminal device identifies a PDU included in the PDU set, the terminal device identifies PSI of the PDU set, and the terminal device supports PDU set-based processing.

For specific explanations of identifying the PDU set by the terminal device, refer to the descriptions in the foregoing first communication method. Details are not described herein again.

In addition, the first network device may send fourth indication information to the terminal device, where the fourth indication information indicates the application information of the XR service.

Correspondingly, the terminal device receives the fourth indication information sent by the first network device, and determines the application information of the XR service based on the fourth indication information.

For example, the first network device may send the fourth indication information to the terminal device by using a NAS message. For example, the first network device sends the fourth indication information to the terminal device by using a PDU session establishment accept message or a PDU session modification accept message.

Optionally, the terminal device may determine, based on the application information of the XR service and/or the capability information, whether the PDU set can be identified for the XR service. For a specific implementation in which the terminal device determines whether the PDU set can be identified for the XR service, refer to the foregoing manner in which the first network device determines whether the terminal device is able to identify the PDU set. Details are not described herein again.

After the first network device determines that the terminal device is able to identify the PDU set for the XR service, the first network device may send fifth indication information to the second network device. The fifth indication information indicates that the terminal device is able to identify the PDU set for the XR service.

Correspondingly, the second network device receives the fifth indication information sent by the first network device.

Alternatively, the fifth indication information may indicate that the terminal device is not able to identify the PDU set for the XR service.

The second network device may be an access network device. For example, the second network device is a base station.

During implementation, after determining whether the terminal device is able to identify the PDU set for the XR service, the first network device may send the fifth indication information to the second network device when determining that the terminal device is able to identify the PDU set for the XR service, where the fifth indication indicates that the terminal device is able to identify the PDU set for the XR service; or when determining that the terminal device is not able to identify the PDU set for the XR service, the first network device does not notify the second network device.

Alternatively, after determining whether the terminal device is able to identify the PDU set for the XR service, the first network device may send the fifth indication information to the second network device when determining that the terminal device is able to identify the PDU set for the XR service, where the fifth indication indicates that the terminal device is able to identify the PDU set for the XR service; or send the fifth indication information to the second network device when determining that the terminal device is not able to identify the PDU set for the XR service, where the fifth indication indicates that the terminal device is not able to identify the PDU set for the XR service.

Alternatively, the fifth indication information may include requirement information related to the PDU set, for example, delay requirement information of the PDU set. The second network device may determine, based on the delay requirement information of the PDU set, that the terminal device is able to identify the PDU set for the XR service.

After receiving the fifth indication information, the second network device sends configuration information to the terminal device, where the configuration information indicates processing performed by the terminal device on the PDU set.

Optionally, the processing that is on the PDU set and that is indicated by the configuration information includes processing on the PDU set corresponding to the XR service.

The processing that is on the PDU set and that is indicated by the configuration information may include discarding based on the PDU set. For specific indication content indicated by the configuration information, refer to the foregoing descriptions in the foregoing first communication method. Details are not described herein again.

Optionally, when the fifth indication information indicates that the terminal device is able to identify the PDU set, the second network device sends PDU set-based discarding configuration information to the terminal device. For example, when the first indication information indicates that the terminal device is able to identify a PDU set for a first PDCP entity, the second network device sends PDU set-based discarding configuration information of the first PDCP entity to the terminal device.

With reference to FIG. 8, the following describes an overall procedure of the communication method provided in this embodiment of this application. The following steps may be included.

Step 800: A terminal device sends capability information to a first network device.

The capability information indicates a capability of the terminal device related to PDU set identification.

Step 801: The first network device determines whether the terminal device is able to identify a PDU set for an XR service.

Optionally, the first network device may determine, based on application information of the XR service and/or the capability information of the terminal device, whether the terminal device is able to identify the PDU set for the XR service. For a specific implementation, refer to the foregoing descriptions.

Step 802: The first network device sends fourth indication information to the terminal device.

The fourth indication information indicates the application information of the XR service.

Step 803: The terminal device determines whether the PDU set can be identified for the XR service.

Optionally, the terminal device may determine, based on the application information of the XR service and/or the capability information of the terminal device, whether the PDU set can be identified for the XR service. For a specific implementation, refer to the foregoing descriptions.

Step 804: The first network device sends fifth indication information to a second network device.

Optionally, the fifth indication information may indicate that the terminal device is able to identify the PDU set for the XR service. Alternatively, the fifth indication information may indicate that the terminal device is not able to identify the PDU set for the XR service.

Step 805: The second network device sends configuration information to the terminal device.

The configuration information may indicate processing performed by the terminal device on the PDU set.

Optionally, the configuration information may be determined by the second network device based on the fifth indication information. For example, when the fifth indication information indicates that the terminal device is able to identify the PDU set, the configuration information may indicate the terminal device to discard the PDU set.

An embodiment of this application provides a communication method, which may be applied to a case in which a terminal device is not able to identify a PDU set. An example in which a terminal device and a network device are execution bodies is used below for description. However, the execution bodies may alternatively be a module (for example, a chip) used in the terminal device and a module (for example, a chip) used in the network device. Processing performed by a single execution entity shown in this embodiment of this application may alternatively be performed by a plurality of execution entities. These execution entities may be logically and/or physically separated. For example, processing performed by the network device may be performed by at least one of a CU, a DU, and an RU.

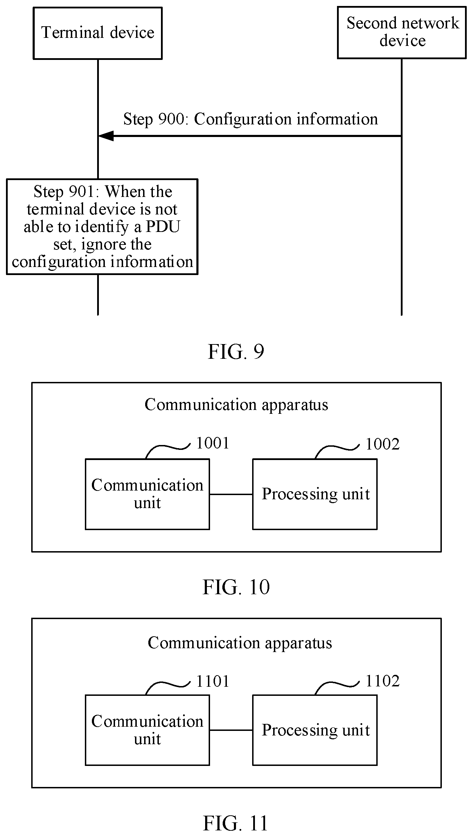

As shown in FIG. 9, the method may include the following steps.

Step 900: A terminal device receives configuration information of a second network device.

Correspondingly, the second network device sends the configuration information.

The second network device may be an access network device. For example, the second network device may be a base station.

Optionally, the configuration information indicates processing performed by the terminal device on a PDU set.

Optionally, the processing that is on the PDU set and that is indicated by the configuration information includes processing on a PDU set corresponding to at least one of a first DRB, a first PDCP entity, a first QoS flow, and a first PDU session.

Optionally, the first DRB may be a DRB corresponding to an XR service of the terminal device, the first PDCP entity may be a PDCP entity corresponding to the XR service of the terminal device, the first QoS flow may be a QoS flow corresponding to the XR service of the terminal device, and the first PDU session may be a PDU session corresponding to the XR service of the terminal device.

The PDU set corresponding to the at least one of the first DRB, the first PDCP entity, the first QoS flow, and the first PDU session may be a PDU set corresponding to an XR service currently initiated by the terminal.

The processing that is on the PDU set and that is indicated by the configuration information may include discarding based on the PDU set. For specific indication content indicated by the configuration information, refer to the foregoing descriptions in the foregoing first communication method. Details are not described herein again.

Step 901: When the terminal device is not able to identify the PDU set, the terminal device ignores the configuration information.

Optionally, that the terminal device is not able to identify the PDU set includes: The terminal device is not able to identify the PDU set corresponding to the at least one of the first DRB, the first PDCP entity, the first QoS flow, and the first PDU session.

Optionally, that the terminal device ignores the configuration information includes: The terminal device does not process the PDU set, or processes the PDU set not based on the configuration information. Optionally, the terminal device may not process the PDU set corresponding to the at least one of the first DRB, the first PDCP entity, the first QoS flow, and the first PDU session; or the terminal device may process, not based on the configuration information, the PDU set corresponding to the at least one of the first DRB, the first PDCP entity, the first QoS flow, and the first PDU session.

For example, the configuration information received by the terminal device indicates the terminal device to discard a part or all of the PDU set for the first PDCP entity when network congestion occurs. If the terminal device does not support PDU set identification on the first PDCP entity, or if the terminal device does not support PDU set identification of the XR service associated with the first PDCP entity, the terminal device ignores the configuration information. The terminal device may not discard the PDU set for the first PDCP entity.

For another example, the configuration information received by the terminal device indicates that when network congestion occurs, the terminal device discards, for the first PDCP entity, a PDU set whose PDU set importance threshold satisfies a condition. That the PDU set importance satisfies the condition may include: The importance of the PDU set is greater than or equal to an importance threshold N (for example, N is a positive integer greater than or equal to 0). In this case, if the terminal device does not support PDU set identification on the first PDCP entity, or if the terminal device does not support PDU set identification of the XR service associated with the first PDCP entity, the terminal device ignores the configuration information. The terminal device may not discard the PDU set for the first PDCP entity. Alternatively, the terminal device may ignore the threshold N indicated in the configuration information, and discard the PDU set for the first PDCP entity randomly or according to a preset rule. For example, the terminal device determines a threshold M, and discards a PDU set whose PDU set importance is greater than or equal to the threshold M, where M is a positive integer greater than or equal to 0. For another example, the terminal device may randomly discard a PDU set.

In the foregoing examples, the first PDCP entity may be alternatively replaced with the first DRB, the first QoS flow, or the first PDU session.

In embodiments of this application, that the terminal device identifies the PDU set includes at least one of the following:
The terminal device identifies a PDU included in the PDU set, the terminal device identifies PSI of the PDU set, and the terminal device supports PDU set-based processing. For specific explanations, refer to the descriptions in the foregoing first communication method. Details are not described herein again.

It should be noted that, the solutions provided in embodiments of this application may be further applied to data burst (data burst) identification of the terminal device. For example, the solutions in embodiments of this application may be applied to indicate whether the terminal device is able to identify a data burst, or may be applied to indicate whether the terminal device is able to identify a data burst for a first DRB, a first PDCP entity, a first QoS flow, or a first PDU session. For specific implementations of indicating and determining whether the terminal device is able to identify the data burst, refer to the foregoing implementations of indicating and determining whether the terminal device is able to identify the PDU set. In this embodiment, the PDU set in the foregoing embodiment may be replaced with a data burst. Optionally, processing on the data burst may further include reporting uplink service information based on the data burst, for example, reporting a periodicity, jitter information, and time of arrival of the data burst by using UE assistance information. Data burst-based processing may further include configured discontinuous reception (discontinuous reception, DRX) information or configured grant (configured grant, CG) information. Optionally, the terminal device may identify the data burst by using an indication (for example, an EDB field) in a higher-layer header.

It should be understood that in the foregoing embodiments, the terminal and/or the network device may perform a part or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

Based on a same inventive concept as the method embodiments, an embodiment of this application provides a communication apparatus. A structure of the communication apparatus may be shown in FIG. 10, and the communication apparatus includes a communication unit 1001 and a processing unit 1002.

In an implementation, the communication apparatus may be specifically configured to implement the method performed by the terminal device. The apparatus may be the terminal device, or may be a chip or a chip set in the terminal device or a part that is of the chip and that is configured to perform a related method function. The processing unit 1002 is configured to determine first indication information, where the first indication information indicates that the terminal device is able to identify a protocol data unit PDU set, and the first indication information is associated with one or more of the following: a first DRB, a first PDCP entity, a first QoS flow, and a first PDU session. The communication unit 1001 is configured to send the first indication information.

In a possible design, the first DRB is a DRB corresponding to an XR service of the terminal device, the first PDCP entity is a PDCP entity corresponding to the XR service of the terminal device, the first QoS flow is a QoS flow corresponding to the XR service of the terminal device, and the first PDU session is a PDU session corresponding to the XR service of the terminal device.

In a possible design, the first indication information is determined by the terminal device based on application information of the XR service and/or capability information of the terminal device, and the capability information indicates a capability that is of the terminal device and that is related to the PDU set identification.

In a possible design, the capability information includes at least one of the following: the terminal device supports a capability of identifying the PDU set according to a first protocol, where the first protocol includes at least one of RTP, HTTP, UDP, and IP; and the terminal device supports a capability of identifying the PDU set based on traffic detection.

In a possible design, the communication unit 1001 is configured to receive second indication information, where the second indication information indicates the application information of the XR service.

In a possible design, the first indication information is carried in at least one of the following messages:
a UE assistance information message, an RRC reconfiguration complete message, an RRC connection establishment complete message, and an RRC connection resume complete message.

In a possible design, the first indication information is carried in a NAS message.

In a possible design, that the terminal device is able to identify the PDU set, as indicated by the first indication information includes at least one of the following:
the terminal device is able to identify a PDU included in the PDU set, the terminal device is able to identify PSI of the PDU set, and the terminal device is able to support PDU set-based processing.

Based on a same inventive concept as the method embodiments, an embodiment of this application provides a communication apparatus. A structure of the communication apparatus may be shown in FIG. 11, and the communication apparatus includes a communication unit 1101 and a processing unit 1102.

In an implementation, the communication apparatus may be specifically configured to implement the method performed by the network device (for example, the first network device and/or the second network device). The apparatus may be the network device, or may be a chip or a chip set in the network device or a part that is of the chip and that is configured to perform a related method function. The communication unit 1101 is configured to receive first indication information, where the first indication information indicates that a terminal device is able to identify a protocol data unit PDU set, and the first indication information is associated with one or more of the following: a first DRB, a first PDCP entity, a first QoS flow, and a first PDU session. The communication unit 1101 may receive the first indication information under control of the processing unit 1102.

In a possible design, the first DRB is a DRB corresponding to an XR service of the terminal device, the first PDCP entity is a PDCP entity corresponding to the XR service of the terminal device, the first QoS flow is a QoS flow corresponding to the XR service of the terminal device, and the first PDU session is a PDU session corresponding to the XR service of the terminal device.

In a possible design, the communication unit 1101 is configured to send configuration information to the terminal device, where the configuration information indicates processing performed by the terminal device on the PDU set.

In a possible design, the processing that is on the PDU set and that is indicated by the configuration information includes processing on a PDU set corresponding to at least one of the first DRB, the first PDCP entity, the first QoS flow, and the first PDU session.

In a possible design, the first indication information is carried in at least one of the following messages: a UE assistance information message, an RRC reconfiguration complete message, an RRC connection establishment complete message, and an RRC connection resume complete message.

In a possible design, the communication unit 1101 is configured to send third indication information, where the third indication information indicates indication information related to the PDU set.

In a possible design, the third indication information includes the first indication information.

In a possible design, the communication unit 1101 is configured to send second indication information to the terminal device, where the second indication information indicates application information of the XR service.

In a possible design, the first indication information is carried in a NAS message.

In a possible design, that the terminal device is able to identify the PDU set, as indicated by the first indication information includes at least one of the following:
the terminal device is able to identify a PDU included in the PDU set, the terminal device is able to identify PSI of the PDU set, and the terminal device is able to support PDU set-based processing.

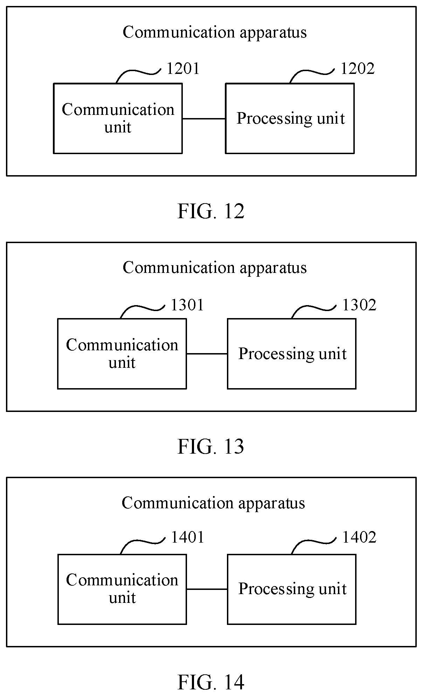

Based on a same inventive concept as the method embodiments, an embodiment of this application provides a communication apparatus. A structure of the communication apparatus may be shown in FIG. 12, and the communication apparatus includes a communication unit 1201 and a processing unit 1202.

In an implementation, the communication apparatus may be specifically configured to implement the method performed by the terminal device. The apparatus may be the terminal device, or may be a chip or a chip set in the terminal device or a part that is of the chip and that is configured to perform a related method function. The processing unit 1202 is configured to determine capability information, where the capability information indicates a capability of the terminal device related to PDU set identification. The communication unit 1201 is configured to send the capability information to a first network device.

In a possible design, the communication unit 1201 is configured to receive fourth indication information sent by the first network device, where the fourth indication information indicates application information of the XR service.

In a possible design, the processing unit 1202 is configured to determine, based on the application information of the XR service and/or the capability information, that the terminal device is able to identify a PDU set for the XR service.

In a possible design, the capability information includes at least one of the following:
the terminal device supports a capability of identifying the PDU set according to a first protocol, where the first protocol includes at least one of RTP, HTTP, UDP, and IP; and the terminal device supports a capability of identifying the PDU set based on traffic detection.

In a possible design, that the terminal device is able to identify the PDU set for the XR service includes at least one of the following:
the terminal device is able to identify a 1^{st} PDU or a last PDU of the PDU set, the terminal device is able to identify PSI of the PDU set, and the terminal device is able to support PDU set-based processing.

Based on a same inventive concept as the method embodiments, an embodiment of this application provides a communication apparatus. A structure of the communication apparatus may be shown in FIG. 13, and the communication apparatus includes a communication unit 1301 and a processing unit 1302.

In an implementation, the communication apparatus may be specifically configured to implement the method performed by the first network device. The apparatus may be the first network device, or may be a chip or a chip set in the first network device or a part that is of the chip and that is configured to perform a related method function. The communication unit 1301 is configured to receive capability information sent by a terminal device, where the capability information indicates a capability that is of the terminal device and that is related to PDU set identification. The processing unit 1302 is configured to determine, based on the capability information, that the terminal device is able to identify a PDU set for an XR service.

In a possible design, the communication unit 1301 is configured to send fifth indication information to a second network device, where the fifth indication information indicates that the terminal device is able to identify the PDU set for the XR service.

In a possible design, the processing unit 1302 is configured to determine, based on the capability information and/or application information of the XR service, that the terminal device is able to identify the PDU set for the XR service.

In a possible design, the communication unit 1301 is configured to send fourth indication information to the terminal device, where the fourth indication information indicates the application information of the XR service.

In a possible design, the capability information includes at least one of the following:
the terminal device supports a capability of identifying the PDU set according to a first protocol, where the first protocol includes at least one of a real-time transport protocol RTP, a hypertext transfer protocol HTTP, a user datagram protocol UDP, and an internet protocol IP; and
the terminal device supports a capability of identifying the PDU set based on traffic detection.

In a possible design, that the terminal device is able to identify the PDU set for the XR service includes at least one of the following:
the terminal device is able to identify a 1^{st} PDU or a last PDU of the PDU set, the terminal device is able to identify PSI of the PDU set, and the terminal device is able to support PDU set-based processing.

Based on a same inventive concept as the method embodiments, an embodiment of this application provides a communication apparatus. A structure of the communication apparatus may be shown in FIG. 14, and the communication apparatus includes a communication unit 1401 and a processing unit 1402.

In an implementation, the communication apparatus may be specifically configured to implement the method performed by the second network device. The apparatus may be the second network device, or may be a chip or a chip set in the second network device or a part that is of the chip and that is configured to perform a related method function. The communication unit 1401 is configured to: receive fifth indication information, where the fifth indication information indicates that a terminal device is able to identify a PDU set for an XR service; and send configuration information to the terminal device, where the configuration information indicates processing performed by the terminal device on the PDU set. The communication unit 1401 may receive and/or send information under control of the processing unit 1402.

In a possible design, a capability of the processing that is on the PDU set and that is indicated by the configuration information includes a capability of processing on the PDU set corresponding to the XR service.

Division into the units in embodiments of this application is an example and is merely logical function division, and may be other division in an actual implementation. In addition, functional units in embodiments of this application may be integrated into one processor, and each of the units may exist alone physically, or two or more units may be integrated into one module. The integrated unit may be implemented in a form of hardware, or may be implemented in a form of a software functional module. It may be understood that for functions or implementations of the units in embodiments of this application, further refer to related descriptions in the method embodiments.

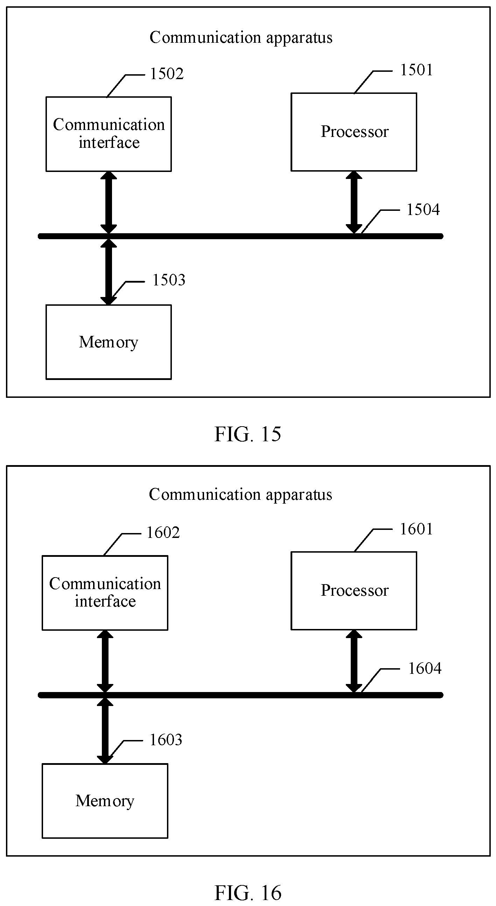

In a possible manner, the communication apparatus may be shown in FIG. 15. The apparatus may be a communication device or a chip in the communication device. The communication device may be the terminal device in the foregoing embodiments. The apparatus includes a processor 1501 and a communication interface 1502, and may further include a memory 1503.

The processor 1501 may be a CPU, a digital processing unit, or the like. The communication interface 1502 may be a transceiver, an interface circuit like a transceiver circuit, a transceiver chip, or the like. The apparatus further includes the memory 1503, configured to store a program executed by the processor 1501. The memory 1503 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 1503 is any other medium that can be used to carry or store expected program code in a form of instructions or a data structure and that can be accessed by a computer, but is not limited thereto.

The processor 1501 is configured to execute the program code stored in the memory 1503, and the communication interface 1502 is specifically configured to perform the action of the communication unit 1001 or the communication unit 1201. Details are not described herein again in this application.

In this embodiment of this application, a specific connection medium between the communication interface 1502, the processor 1501, and the memory 1503 is not limited. In this embodiment of this application, the memory 1503, the processor 1501, and the communication interface 1502 are connected through a bus 1504 in FIG. 15. The bus is represented by a thick line in FIG. 15. A connection manner between other components is merely an example for description, and is not limited thereto. The bus may be classified into an address bus, a data bus, a control bus, and the like. For ease of representation, only one thick line represents the bus in FIG. 15, but this does not mean that there is only one bus or only one type of bus.

In a possible manner, the communication apparatus may be shown in FIG. 16. The apparatus may be a communication device or a chip in the communication device. The communication device may be the network device (which may be the first network device or the second network device) in the foregoing embodiments. The apparatus includes a processor 1601 and a communication interface 1602, and may further include a memory 1603.

The processor 1601 may be a CPU, a digital processing unit, or the like. The communication interface 1602 may be a transceiver, an interface circuit like a transceiver circuit, a transceiver chip, or the like. The apparatus further includes a memory 1603, configured to store a program executed by the processor 1601. The memory 1603 may be a non-volatile memory like an HDD or an SSD, or may be a volatile memory like a RAM. The memory 1603 is any other medium that can be used to carry or store expected program code in a form of instructions or a data structure and that can be accessed by a computer, but is not limited thereto.

The processor 1601 is configured to execute the program code stored in the memory 1603, and the communication interface 1602 is specifically configured to perform the action of the communication unit 1101, the communication unit 1301, or the communication unit 1401. Details are not described herein again in this application.

In this embodiment of this application, a specific connection medium between the communication interface 1602, the processor 1601, and the memory 1603 is not limited. In this embodiment of this application, the memory 1603, the processor 1601, and the communication interface 1602 are connected through a bus 1604 in FIG. 16. The bus is represented by a thick line in FIG. 16. A connection manner between other components is merely an example for description, and is not limited thereto. The bus may be classified into an address bus, a data bus, a control bus, and the like. For ease of representation, only one thick line represents the bus in FIG. 16, but this does not mean that there is only one bus or only one type of bus.

An embodiment of this application further provides a communication system, including a communication apparatus configured to implement the function of the terminal device in the foregoing embodiments and a communication apparatus configured to implement the function of the network device (which may include the first network device and/or the second network device) in the foregoing embodiments.

An embodiment of this application further provides a computer-readable storage medium, configured to store computer software instructions that need to be executed by the processor. The computer software instructions include a program that needs to be executed by the processor.

An embodiment of this application further provides a computer program product, including a computer program that needs to be executed by the processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

## Claims

1. A communication method, wherein the method comprises:
receiving first configuration information, wherein the first configuration information comprises configuration information associated with at least one of a first data radio bearer DRB, a first packet data convergence protocol PDCP entity, a first quality of service QoS flow, and a first protocol data unit PDU session; and
sending first indication information, wherein the first indication information indicates that a terminal device is able to identify a PDU set, and the first indication information is associated with at least one of the first DRB, the first PDCP entity, the first QoS flow, and the first PDU session.

2. The method according to claim 1, wherein
the first DRB is a DRB corresponding to an XR service of the terminal device;
the first PDCP entity is a PDCP entity corresponding to the XR service of the terminal device;
the first QoS flow is a QoS flow corresponding to the XR service of the terminal device; and
the first PDU session is a PDU session corresponding to the XR service of the terminal device.

3. The method according to claim 2, wherein the first indication information is determined by the terminal device based on application information of the XR service and/or capability information of the terminal device, and the capability information indicates a capability that is of the terminal device and that is related to the PDU set identification.

4. The method according to claim 3, wherein the capability information comprises at least one of the following:
the terminal device supports a capability of identifying the PDU set according to a first protocol, wherein the first protocol comprises at least one of a real-time transport protocol RTP, a hypertext transfer protocol HTTP, a user datagram protocol UDP, and an internet protocol IP; and
the terminal device supports a capability of identifying the PDU set based on traffic detection.

5. The method according to any one of claims 2 to 4, wherein the method further comprises:
receiving second indication information, wherein the second indication information indicates the application information of the XR service.

6. The method according to any one of claims 1 to 5, wherein the first indication information is carried in at least one of the following messages: a UE assistance information message, a radio resource control RRC reconfiguration complete message, an RRC connection establishment complete message, and an RRC connection resume complete message.

7. The method according to any one of claims 1 to 5, wherein the first indication information is carried in a NAS message.

8. The method according to any one of claims 1 to 7, wherein that the terminal device is able to identify the PDU set, as indicated by the first indication information comprises at least one of the following:
the terminal device is able to identify a PDU comprised in the PDU set, the terminal device is able to identify PSI of the PDU set, and the terminal device is able to support PDU set-based processing.

9. The method according to any one of claims 1 to 8, wherein the first configuration information is carried in at least one of the following messages: an RRC reconfiguration message, an RRC connection establishment message, an RRC connection resume message, and an RRC connection re-establishment message.

10. The method according to any one of claims 1 to 9, wherein the first indication information is sent when at least one of the following is satisfied:
the terminal device is configured to send uplink service information, wherein the uplink service information comprises the first indication information;
the first indication information is changed compared with first indication information sent last time; and
a timer satisfies a condition, wherein the timer is configured to control sending of the first indication information.

11. The method according to claim 10, wherein the method further comprises:
receiving seventh indication information, wherein the seventh indication information indicates or is used to request the terminal device to report the uplink service information.

12. A communication method, wherein the method comprises:
sending first configuration information, wherein the first configuration information comprises configuration information associated with at least one of a first data radio bearer DRB, a first packet data convergence protocol PDCP entity, a first quality of service QoS flow, and a first protocol data unit PDU session; and
receiving first indication information, wherein the first indication information indicates that a terminal device is able to identify a PDU set, and the first indication information is associated with at least one of the first DRB, the first PDCP entity, the first QoS flow, and the first PDU session.

13. The method according to claim 12, wherein
the first DRB is a DRB corresponding to an XR service of the terminal device;
the first PDCP entity is a PDCP entity corresponding to the XR service of the terminal device;
the first QoS flow is a QoS flow corresponding to the XR service of the terminal device; and
the first PDU session is a PDU session corresponding to the XR service of the terminal device.

14. The method according to claim 12 or 13, wherein the method further comprises:
sending configuration information to the terminal device, wherein the configuration information indicates processing performed by the terminal device on the PDU set.

15. The method according to claim 14, wherein the processing that is on the PDU set and that is indicated by the configuration information comprises processing on a PDU set corresponding to at least one of the first DRB, the first PDCP entity, the first QoS flow, and the first PDU session.

16. The method according to claim 14 or 15, wherein the first indication information is carried in at least one of the following messages: a UE assistance information message, an RRC reconfiguration complete message, an RRC connection establishment complete message, and an RRC connection resume complete message.

17. The method according to claim 12 or 13, wherein the method further comprises:
sending third indication information, wherein the third indication information indicates indication information related to the PDU set.

18. The method according to claim 17, wherein
the third indication information comprises the first indication information.

19. The method according to claim 17 or 18, wherein the method further comprises:
sending second indication information to the terminal device, wherein the second indication information indicates application information of the XR service.

20. The method according to any one of claims 17 to 19, wherein the first indication information is carried in a NAS message.

21. The method according to any one of claims 12 to 20, wherein that the terminal device is able to identify the PDU set, as indicated by the first indication information comprises at least one of the following:
the terminal device is able to identify a PDU comprised in the PDU set, the terminal device is able to identify PSI of the PDU set, and the terminal device is able to support PDU set-based processing.

22. The method according to any one of claims 12 to 21, wherein the first configuration information is carried in at least one of the following messages: an RRC reconfiguration message, an RRC connection establishment message, an RRC connection resume message, and an RRC connection re-establishment message.

23. The method according to any one of claims 12 to 22, wherein the method further comprises:
sending seventh indication information, wherein the seventh indication information indicates or is used to request the terminal device to report uplink service information, and the uplink service information comprises the first indication information.

24. A communication method, wherein the method comprises:
determining capability information, wherein the capability information indicates a capability of a terminal device related to PDU set identification; and
sending the capability information to a first network device.

25. The method according to claim 24, wherein the method further comprises:
receiving fourth indication information sent by the first network device, wherein the fourth indication information indicates application information of the XR service.

26. The method according to claim 24 or 25, wherein the method further comprises:
determining, based on the application information of the XR service and/or the capability information, that the terminal device is able to identify a PDU set for the XR service.

27. The method according to any one of claims 24 to 26, wherein the capability information comprises at least one of the following:
the terminal device supports a capability of identifying the PDU set according to a first protocol, wherein the first protocol comprises at least one of a real-time transport protocol RTP, a hypertext transfer protocol HTTP, a user datagram protocol UDP, and an internet protocol IP; and
the terminal device supports a capability of identifying the PDU set based on traffic detection.

28. The method according to any one of claims 24 to 27, wherein that the terminal device is able to identify the PDU set for the XR service comprises at least one of the following:
the terminal device is able to identify a 1^{st} PDU or a last PDU of the PDU set, the terminal device is able to identify PSI of the PDU set, and the terminal device is able to support PDU set-based processing.

29. A communication method, wherein the method comprises:
receiving capability information sent by a terminal device, wherein the capability information indicates a capability that is of the terminal device and that is related to PDU set identification; and
determining, based on the capability information, that the terminal device is able to identify a PDU set for an XR service.

30. The method according to claim 29, wherein
sending fifth indication information to a second network device, wherein the fifth indication information indicates that the terminal device is able to identify the PDU set for the XR service.

31. The method according to claim 29 or 30, wherein the determining, based on the capability information, that the terminal device is able to identify the PDU set for the XR service comprises:
determining, based on the capability information and/or application information of the XR service, that the terminal device is able to identify the PDU set for the XR service.

32. The method according to claim 31, wherein the method further comprises:
sending fourth indication information to the terminal device, wherein the fourth indication information indicates the application information of the XR service.

33. The method according to any one of claims 29 to 32, wherein the capability information comprises at least one of the following:
the terminal device supports a capability of identifying the PDU set according to a first protocol, wherein the first protocol comprises at least one of a real-time transport protocol RTP, a hypertext transfer protocol HTTP, a user datagram protocol UDP, and an internet protocol IP; and
the terminal device supports a capability of identifying the PDU set based on traffic detection.

34. The method according to any one of claims 29 to 33, wherein that the terminal device is able to identify the PDU set for the XR service comprises at least one of the following:
the terminal device is able to identify a 1^{st} PDU or a last PDU of the PDU set, the terminal device is able to identify PSI of the PDU set, and the terminal device is able to support PDU set-based processing.

35. A communication method, wherein the method comprises:
receiving fifth indication information, wherein the fifth indication information indicates that a terminal device is able to identify a PDU set for an XR service; and
sending configuration information to the terminal device, wherein the configuration information indicates processing performed by the terminal device on the PDU set.

36. The method according to claim 35, wherein a capability of the processing that is on the PDU set and that is indicated by the configuration information comprises a capability of processing on the PDU set corresponding to the XR service.

37. A communication apparatus, comprising a module configured to perform the method according to any one of claims 1 to 11, a module configured to perform the method according to any one of claims 12 to 23, a module configured to perform the method according to any one of claims 24 to 28, a module configured to perform the method according to any one of claims 29 to 34, or a module configured to perform the method according to claim 35 or 36.

38. A computer-readable storage medium, storing a computer program or instructions, wherein when the computer program or the instructions are run on a computer, the computer-readable storage medium is caused to implement the method according to any one of claims 1 to 11, the computer-readable storage medium is caused to implement the method according to any one of claims 12 to 23, the computer-readable storage medium is caused to implement the method according to any one of claims 24 to 28, the computer-readable storage medium is caused to implement the method according to any one of claims 29 to 34, or the computer-readable storage medium is caused to implement the method according to claim 35 or 36.

39. A computer program product, comprising a computer program, wherein when the computer program is executed by a communication apparatus, the method according to any one of claims 1 to 11 is implemented; when the computer program is executed by a communication apparatus, the method according to any one of claims 12 to 23 is implemented; when the computer program is executed by a communication apparatus, the method according to any one of claims 24 to 28 is implemented; when the computer program is executed by a communication apparatus, the method according to any one of claims 29 to 34 is implemented; or when the computer program is executed by a communication apparatus, the method according to claim 35 or 36 is implemented.

40. A communication apparatus, comprising a processor, wherein the processor is configured to perform the method according to any one of claims 1 to 11, perform the method according to any one of claims 12 to 23, perform the method according to any one of claims 24 to 28, perform the method according to any one of claims 29 to 34, or perform the method according to claim 35 or 36.
